**Europäisches Patentamt**

**European Patent Office**

**Office européen des brevets**

(19)

(11) Numéro de publication : **0 532 419 B1**

## (12)    FASCICULE DE BREVET EUROPEEN

(45) Date de publication du fascicule du brevet :
**25.10.95 Bulletin 95/43**

(51) Int. Cl.$^6$ : **G01L 3/00,** G01M 15/00

(21) Numéro de dépôt : **92402482.1**

(22) Date de dépôt : **11.09.92**

(54) **Procédé et dispositif de mesure du couple d'un moteur thermique à combustion interne.**

(30) Priorité : **12.09.91 FR 9111273**

(43) Date de publication de la demande :
**17.03.93 Bulletin 93/11**

(45) Mention de la délivrance du brevet :
**25.10.95 Bulletin 95/43**

(84) Etats contractants désignés :
**AT CH DE ES GB IT LI NL SE**

(56) Documents cités :
**WO-A-90/07051**

(73) Titulaire : **REGIE NATIONALE DES USINES RENAULT S.A.**
**34, Quai du Point du Jour**
**F-92109 Boulogne Billancourt (FR)**

(72) Inventeur : **Jehanno, Gilles**
**32, Boulevard de Mantes**
**Elisabethville, F-78410 Aubergenville (FR)**

## Description

L'invention se rapporte à un procédé et un dispositif de mesure du couple d'un moteur thermique à combustion interne et, plus précisément, à un dispositif de mesure du couple gaz moyen par combustion, produit par un tel moteur au cours de chaque combustion, notamment lorsqu'il est monté sur un véhicule de tourisme ou sur un véhicule industriel.

Sur un moteur thermique à combustion interne, le couple produit est la résultante de nombreux paramètres et reflète l'adéquation des réglages. Il constitue la grandeur de sortie d'un système dynamique complexe. Sa mesure est relativement simple et courante sur un banc d'essais, mais le coût de cette mesure est relativement élevé. En outre, les bancs de mesure usuels ne délivrent que les valeurs moyennes sur plusieurs cycles du couple du moteur en fonctionnement stabilisé. De telles mesures de valeurs moyennes sur un grand nombre de combustions sont insuffisantes à bien des égards, par exemple pour optimiser certains réglages du moteur ou pour en diagnostiquer certains défauts de fonctionnement. Parmi ces défauts, on notera les ratés de combustion dont la détection et l'évaluation statistique sont prévues par les nouvelles réglementations internationales.

Pour atteindre ces derniers objectifs, l'analyse quantitative du couple gaz moyen par combustion produit par les combustions du mélange gazeux dans les différents cylindres des moteurs thermiques s'impose. Une telle analyse n'a jusqu'à présent été pratiquée qu'en laboratoire ou sur des moteurs de très grande puissance et elle a généralement fait appel à des relevés de pression dans les chambres de combustion. Cette technique présente l'inconvénient majeur de ne pouvoir être mise en oeuvre que sur des moteurs conçus (ou spécialement modifiés) pour permettre une implantation de capteurs de pression. En outre, elle n'est, à l'évidence, pas immédiatement applicable aux moteurs montés en série sur véhicule et, par ailleurs, elle le demeurera aussi longtemps que la fiabilité, le prix, la durée de vie et la commodité de mise en oeuvre des capteurs de pression ne seront pas conformes aux impératifs économiques de l'industrie automobile.

L'objet de l'invention concerne un dispositif de mesure du couple gaz moyen par combustion des moteurs thermiques à combustion interne présentant les caractéristiques suivantes : bonne précision à tout régime et toute charge du moteur, grande fiabilité, grande durée de vie, facilité de montage, emploi immédiat sur un grand nombre de moteurs installés sur véhicules, faible encombrement et faible coût.

Dans une demande internationale de brevet PCT, déposée par Motorola Inc. et publiée le 20 juin 1990 sous le N° WO 90/07051, est décrit un système de gestion électronique du fonctionnement d'un moteur thermique à combustion interne. Ce système est fondé sur le postulat que la valeur instantanée de la période de défilement des dents d'une couronne de mesure, solidaire du volant d'inertie du moteur, devant un capteur fixe, correspond à la mesure de la puissance instantanée successivement produite dans chacun des cylindres du moteur. Le signal ainsi produit par le capteur est traité en conséquence. Ce traitement consiste : (1) à mesurer la période instantanée $d_i$ de défilement des dents de la couronne devant le capteur, (2) à respectivement multiplier les périodes $d_i$ des dents afférentes à chacun des cylindres par des facteurs de pondération $P_i$ déterminés appartenant à une suite correspondant à un critère de fonctionnement particulier du moteur tel que le cliquetis ou la puissance.(la procédure de détermination de ces facteurs n'est pas décrite) (3) à faire la somme des résultats $d_i.P_i$ obtenus pour chaque cylindre, (4) à comparer cette somme à une valeur particulière prise comme référence, (5) à déduire, le cas échéant, du résultat de cette comparaison la présence de cliquetis dans un cylindre ou le déséquilibre de puissance d'un cylindre par rapport aux autres et (6) à modifier en conséquence l'alimentation du cylindre en mélange air-carburant.

Le but du système ainsi décrit est de supprimer tout cliquetis dans les cylindres du moteur et/ou d'équilibrer les puissances instantanées fournies par chacun d'eux. De ce fait, la valeur absolue des différentes grandeurs intermédiaires obtenues n'est ni recherchée ni trouvée.

L'objet de la présente invention est, au contraire, d'utiliser le signal produit par le capteur associé à la couronne de mesure du volant d'inertie du moteur, pour calculer la valeur absolue d'une grandeur particulière unique, caractéristique du fonctionnement global d'un moteur thermique à combustion interne, à savoir le couple gaz moyen Cg, produit par chaque combustion du mélange gazeux dans chacun des cylindres d'un tel moteur.

Selon l'invention, un dispositif pour produire une valeur ou un signal électrique Cg, représentatif du couple gaz moyen engendré par chaque combustion du mélange gazeux dans le ou les cylindre(s) d'un moteur thermique à combustion interne, du genre comprenant :
- des repères de mesure disposés sur une couronne solidaire du volant d'inertie du moteur;
- des moyens pour définir une référence d'indexation par tour de volant ou par tour d'arbre à cames pour les repères ;
- un capteur de défilement des repères, monté fixe au voisinage de la couronne;
- des moyens pour produire un signal primaire, représentatif de la durée de défilement de chacun des repères devant le capteur;

caractérisé en ce qu'il comprend également :

- des moyens pour traiter ce signal primaire et ainsi produire deux signaux secondaires respectivement représentatifs de la vitesse angulaire moyenne $\Omega_m$ sur des repères au cours ,d'une période des combustions dans le moteur et, pour la même période des combustions, de la projection $E\cos\Phi$, sur la ligne de référence de phase, des groupes de repères respectivement afférents aux combustions dans les différents cylindres du moteur, de la composante alternative E de la vitesse angulaire instantanée $\Omega_i$ des repères, à la fréquence des combustions dans le moteur;
- des moyens pour combiner ces deux signaux secondaires, suivant une relation :

$$Cg = - a.\Omega_m.E\cos\Phi + b.\Omega_m^2$$

et ainsi produire le signal recherché, les termes a et b étant des constantes déterminées expérimentalement.

Dans le cas particulier d'un moteur à essence quatre cylindres à quatre temps qui fonctionne suivant le cycle de Beau de Rochas, chacun des quatre temps du cycle (admission, compression, combustion-détente, échappement) se produit au cours d'un demi-tour particulier du volant d'inertie solidaire de vilebrequin du moteur. L'énergie cinétique acquise par le système concerné (vilebrequin, volant et masses alternatives) est le résultat des différents couples instantanés positifs et négatifs, exercés sur lui pendant chacun des différents temps du cycle de fonctionnement du moteur.

Le couple Cg, calculé par demi-tour dans le cas particulier ci-dessus, est engendré pendant les phases de compression et de combustion-détente des mélanges gazeux respectivement emprisonnés dans deux cylindres à combustions contiguës. Le moteur étant équipé de quatre cylindres dans le cas envisagé, les deux autres cylindres sont en phases admission et échappement et on peut démontrer, en première approximation, qu'ils n'interviennent pas sur la valeur de Cg du fait de la projection $\cos\Phi$. Les phases de compression étant moins sujettes à des variations, à des dispersions que les phases de combustion-détente, on peut dire, pour des questions de clarté de présentation, que la valeur de Cg calculée sur un demi-tour est celle relative au cylindre qui était en combustion. On peut dire aussi que le couple Cg est une estimation du couple gaz moyen sur les deux phases, compression et combustion-détente, du même cylindre emprisonnant donc le même mélange gazeux.

Quel que soit le moteur, Cg est, d'une part, normalement positif et, d'autre part, équilibré par la somme des couples moyens résistants provenant des variations des inerties rotatives du moteur, des différents frottements internes au moteur, des dépressions d'admission et des surpressions d'échappement des autres cylindres et, bien entendu, du couple utile appliqué à la charge, c'est-à-dire au véhicule.

Le théorème de l'énergie cinétique enseigne que la variation élémentaire de l'énergie cinétique d'un système égale le travail élémentaire des couples auxquels il est soumis. En appliquant ce théorème au système principalement concerné, à savoir le vilebrequin, le volant d'inertie et les masses alternatives impliquées et en supposant que l'ensemble vilebrequin-volant est indéformable, en faisant une analyse harmonique du résultat obtenu, la charge disposée en aval du volant d'inertie étant considérée comme totalement découplée pour la fréquence considérée, on démontre que la composante alternative Ca du couple gaz à la fréquence des combustions dans le moteur, est liée à la vitesse angulaire moyenne $\Omega_m$ du volant d'inertie et à la projection, sur une ligne de référence de phase, de la composante alternative E de la vitesse angulaire instantanée $\Omega_i$ de ce volant, à la fréquence des combustions du moteur, par la relation linéaire suivante :

$$Ca = - a_1.\Omega_m.E\cos\Phi + b_1.\Omega_m^2$$

dans laquelle $a_1$ et $b_1$ sont deux termes constants, le premier proportionnel à l'inertie rotative du moteur et le second, fonction du moment d'inertie des masses alternatives et, dans certains cas de mesure, des irrégularités de position des repères de la couronne de mesure.

Par ailleurs, une étude expérimentale au banc d'essais de plusieurs moteurs thermiques à combustion interne a montré que le rapport Cg/Ca de la valeur moyenne Cg du couple gaz et de la composante alternative Ca du même couple gaz, varie peu pour les différents régimes et pour les différentes charges de fonctionnement du moteur concerné et ce d'autant mieux que la richesse (r) du mélange gazeux est constante ou, supérieure ou égale à l'unité.

En conséquence, l'expérimentation et le calcul pour un système vilebrequin-volant indéformable ont permis d'établir la relation

$$Cg = - a.\Omega_m.E\cos\Phi + b.\Omega_m^2$$

qui est à l'origine de la conception du dispositif de mesure selon l'invention pour les bas régimes du moteur. Dans le cas des hauts régimes de fonctionnement du moteur cette relation de base doit toutefois subir une correction. En effet, à haut régime, les liaisons élastiques de torsion qui existent, tout particulièrement celles entre le vilebrequin et le volant d'inertie du moteur, présentent une fonction de transfert fréquentiel qui modifie le vecteur E représentatif de la composante alternative fondamentale de la vitesse angulaire instantanée du volant, à la fréquence fi des combustions dans le moteur. Comme cette liaison comporte un terme d'amortissement négligeable, sa fonction de transfert peut s'écrire $Z = 1 + (fi/fr)^2$, le terme fi étant la fréquence de combustion proportionnelle à la fréquence fv de rotation du volant ($fi = fv.2k/t$) avec, comme on le verra plus loin, k le nombre de cylindres et t le nombre de temps du cycle de fonctionnement du moteur et fr, la fréquence de résonance mécanique en torsion de la liaison vilebrequin/volant. En pratique, cette fréquence fr est égale à quatre à six fois la fréquence de rotation maximale en Hertz du moteur, de sorte que le terme $z = (fi/fr)^2$ relatif à la fréquence de combustion fi sera souvent faible et qu'un simple facteur de correction $(1-z)$ pourra être appliqué à la constante "a" de la relation de base visée ci-dessus, pour que la valeur Cg calculée soit corrigée de l'effet "torsion vilebrequin/volant".

En pratique, la couronne de mesure dentée solidaire du volant d'inertie et son capteur à réluctance variable associé, actuellement utilisés sur les moteurs à allumage électronique de série, conviennent parfaitement. A cet égard toutefois, on notera qu'un capteur à effet Hall peut être également utilisé avec une couronne de mesure dentée et que les repères de la couronne de mesure peuvent être des facettes réfléchissantes et le capteur associé, être d'un type optoélectronique.

De la sorte, les éléments propres au dispositif de mesure de couple Cg selon l'invention, se réduisent à des circuits électroniques de traitement de signaux et de calcul, de type usuel et d'encombrement réduit, qui pourraient tout simplement être connectés à un matériel existant (le capteur) et être, disjoints ou au moins partiellement intégrés au microprocesseur ou à l'un des microprocesseurs qui équipent le calculateur de gestion électronique du moteur ou du véhicule. Par ailleurs, pour ce qui concerne les fonctions des circuits en question, on notera dès à présent que des traitements simples du signal de mesure initial délivré par le capteur fixe disposé devant le volant, permettent d'élaborer, sans difficultés particulières, le signal ou la valeur primaire $d_i$ et les signaux ou valeurs secondaires, $\Omega_m$ et E, prévus par l'invention.

Grâce au dispositif selon l'invention, il devient désormais techniquement et économiquement possible d'équiper la plupart des véhicules de tourisme de série et des véhicules industriels de série, de moyens de mesure du couple gaz moyen Cg, produit par chaque combustion d'un mélange gazeux dans les cylindres du moteur et de les utiliser pour améliorer en continu le fonctionnement du moteur et pour en surveiller les défauts et ainsi faciliter la mise en oeuvre des nouvelles normes relatives à la composition des gaz d'échappement et au diagnostic les concernant. Un tel dispositif embarqué de mesure de couple était un objectif recherché depuis quelques années par la plupart des constructeurs mais n'était pas atteint jusqu'à ce jour, de façon économique.

L'invention concerne également un procédé pour produire une valeur représentative du couple gaz moyen Cg engendré par chaque combustion du mélange gazeux dans les cylindres d'un moteur thermique à combustion interne, ledit moteur étant du genre comprenant :
- des repères de mesure disposés sur une couronne solidaire du volant d'inertie du moteur;
- des moyens pour définir une référence d'indexation des repères; et
- un capteur de défilement des repères, monté fixe au voisinage de la couronne, caractérisé en ce qu'il comprend les opérations suivantes :
  (a) élaboration d'une valeur primaire représentative de la durée $d_l$ de défilement de chacun des repères devant le capteur;
  (b) traitement de ladite valeur primaire $d_i$ pour produire deux valeurs secondaires respectivement représentatives de la vitesse angulaire moyenne $\Omega_m$ sur les repères au cours d'une période des combustions dans le moteur et de la projection $E\cos\Phi$, sur la ligne de référence de phase des repères afférents aux périodes angulaires de combustion, de la composante alternative E de la vitesse angulaire instantanée $\Omega_i$ des repères à la fréquence des combustion dans le moteur;
  (c) combinaison de ces deux valeurs secondaires suivant une relation :
$$Cg = - a.\Omega_m.E\cos\Phi + b.\Omega_m^2$$
  et ainsi obtenir la valeur recherchée les termes a et b étant des constantes déterminées expérimentalement.

Dans le cas où Cg est une valeur numérique et que le moteur thermique à combustion interne fonctionne avec t temps par cycle de fonctionnement et k cylindres et que le nombre de repères de mesure réels ou virtuels est n, l'opération (b) comprend les opérations suivantes :
  (b1) calcul à partir de $n_c$ valeurs numériques primaires $d_i$, d'une première valeur numérique secondaire $T_k$ représentative de la durée totale de défilement devant le capteur de chaque série de $n_c$ repères, afférente à la période angulaire d'une combustion dans le moteur,
  avec
$$n_c = (n.t)/(2.k)$$
  et

$$T_k = \sum_{o}^{(n_c-1)} d_i$$

(b2) calcul, à partir de $n_c$ valeurs numériques primaires $d_i$ et de facteurs de pondération $\cos(i.2\pi/n_c)$, d'une seconde valeur numérique secondaire $D_k\cos\Phi'k$ représentative de la projection, sur une ligne de référence de phase des repères correspondant à l'origine des périodes angulaires des combustions, de l'amplitude de la composante alternative des durées instantanées $d_i$ de défilement devant le capteur des repères de mesure, à la fréquence des combustions dans le moteur, avec

$$D_k\cos\Phi'_k = (2/n_c) . \sum_{o}^{(n_c-1)} d_i.\cos(i.2\pi/n_c) .$$

Par ailleurs, l'opération (c), pour un moteur fonctionnant à bas régime, consiste à :
(c₁) calculer la valeur numérique recherchée Cg, définie par la relation
$$Cg = A.(D_k.\cos\Phi'_k)/T_k^3 + B/T_k^2 = A. D'_k/T_k^3 + B/T_k^2$$
à partir des deux valeurs numériques secondaires $D_k\cos\Phi'_k$ et $T_k$ et de deux constantes A et B expérimentalement déterminées et enregistrées.

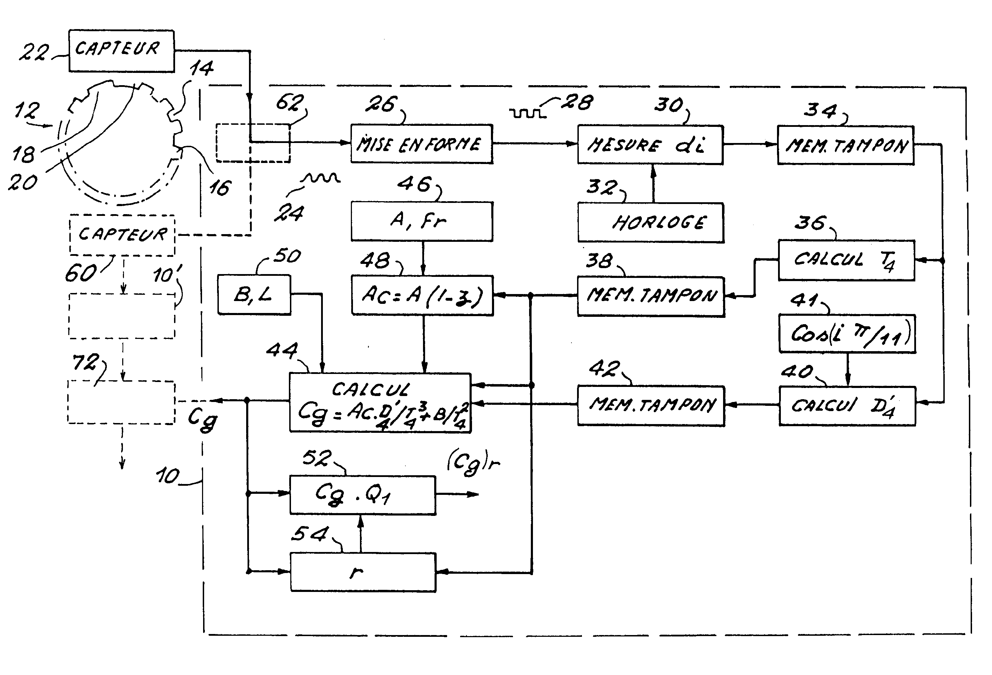

En outre, le procédé peut comporter des opérations complémentaires pour effectuer des corrections en fonction, notamment, de la richesse r, du taux de recirculation des gaz d'échappement, du fonctionnement à haut régime du moteur ou en transitoire de régime. Les caractéristiques et avantages de l'invention ressortiront d'une manière plus précise de la description d'une forme de réalisation particulière de l'invention, faite ci-après à titre d'exemple non limitatif, en référence au dessin annexé dans lequel

- la figure unique est un schéma des différents éléments constitutifs du dispositif selon l'invention.

Selon la figure unique, est représenté le circuit 10 de mesure du couple gaz moyen Cg, produit par chaque combustion du mélange gazeux dans un moteur thermique à quatre temps (t=4) et à quatre cylindres (k=4), équipé d'une couronne de mesure dentée 12, solidaire du volant d'inertie, par exemple la couronne de type standard montée sur les moteurs à allumage électronique.

A titre d'exemple, la couronne 12 comporte sur sa périphérie trente-huit dents identiques, telles que celles référencées 14 et 16, qui sont réparties en deux séries de dix-neuf dents séparées par deux dents de référence, telles que celles référencées 18 et 20, qui sont diamétralement opposées et qui ont une largeur triple de celle des autres dents. En fait, la couronne comporte :
n = 2 x 19 + 2 x 3 = 44 repères équidistants appelés dents réelles ou virtuelles de même module dont deux sont diamétralement opposées pour servir de référence ou d'origine d'indexation permettant de numéroter les dents et, notamment de déterminer la dent $d_o$ qui sera définie ci-après.

A la couronne 12 est associé un capteur fixe 22, par exemple à réluctance variable, adapté à délivrer un signal alternatif 24 de fréquence proportionnelle à la vitesse de défilement des dents de la couronne, c'est-à-dire proportionnelle à la vitesse instantanée du volant.

La position angulaire de ce capteur 22 par rapport aux dents d'indexation 18 au moment où le piston est au point mort haut est connue ou relevée, ce qui permet de déterminer la dent $d_o$ comme étant celle qui défile devant le capteur pendant le passage du piston du cylindre concerné à son point mort haut de combustion.

Le signal, délivré par le capteur 22, est appliqué à l'entrée d'un circuit de mise en forme 26, adapté à délivrer des signaux 28 à fronts raides, de durée égale à la période instantanée $d_i$ des signaux incidents 24 l'indice i variant de O à 21 au fur et à mesure que les dents défilent devant le capteur. Chaque période $d_i$ du signal ainsi produit correspond à la durée de passage d'une dent, soit un plein et un creux, devant le capteur 22. pour ce qui concerne les signaux incidents produits par les dents d'indexation 18, le circuit de mise en forme 26 les transforme de la même façon en un signal à flancs raides, de durée sensiblement triple de celle des signaux afférents aux autres dents (14, 16). Les signaux 28 sont appliqués à un étage 30 de mesure et de calcul des périodes instantanées $d_i$ de défilement des dents réelles et virtuelles de la couronne de mesure 12 devant le capteur 22.

A cet effet, à titre d'exemple de réalisation de l'étage 30, un compteur reçoit de façon continue des impulsions chronométriques de fréquence élevée (1 à 20 MHz, par exemple), produites par une horloge 32, par exemple, à quartz, et il délivre en sortie, des valeurs numériques représentatives des nombres d'impulsions d'horloge comptées, donc de la "date" (modulo débordement du compteur) de chaque transition creux-plein des signaux à fronts raides, produits par l'étage de mise en forme 26. Ce compteur transmet alternativement la "date" $t_{i-1}$ qu'il contient à un premier registre et la date suivante $t_i$ à un second registre. Ces deux registres sont suivis par un étage de calcul adapté à calculer la durée $d_i = (t_i - t_{i-1})$ de la dent d'indice i et à en adresser le résultat à une mémoire-tampon 34. De la sorte, aucune impulsion d'horloge n'est perdue et l'erreur de mesure des durées $d_i$ est minimisée.

Pour ce qui est du traitement de chaque signal 28 produit par l'une des dents longues d'indexation 18, 20 dans le cadre de l'exemple décrit, sa valeur sera divisée par trois et le résultat, affecté aux trois dents virtuelles correspondantes avec, le cas échéant, prise en compte des restes. De la sorte, l'étage 30 de mesure et de calcul des périodes $d_i$, adresse à la mémoire-tampon 34, des séries successives de $n_c = n/2$ (soit 22 dans le cas de l'exemple décrit) valeurs numériques $d_i$, respectivement associées à n/2 coefficients de pondération contenus dans une mémoire permanente 41 et définis par le rang i de la dent réelle ou virtuelle concernée.

Dans le cas du moteur à quatre temps et quatre cylindres de l'exemple, à chaque demi-tour du volant, les valeurs numériques contenues dans la mémoire-tampon 34 sont remises à jour. Les valeurs $d_i$, ainsi mémorisées en 34, à la fin d'un demi-tour de combustion-détente (dans l'exemple décrit), sont appliquées à un étage de calcul 36, adapté à calculer la durée $T_4$ (l'indice 4 correspond aux quatre combustions par cycle) de chaque demi-tour du volant, en accord avec la relation

$$T_4 = \sum_{0}^{21} d_i$$

La dernière valeur numérique $T_4$ calculée dans l'étage 36 est appliquée à une mémoire-tampon 38 et elle y demeure jusqu'à ce qu'elle soit remplacée par la suivante. La vitesse angulaire moyenne du volant d'inertie au cours de la phase combustion-détente qui vient de s'achever, est $\Omega_m = \pi/T_4$.

Les valeurs $d_i$ mémorisées en 34, sont également appliquées à un autre étage de calcul 40, adapté à réaliser, sous forme numérique, une détection angulaire synchrone d'une projection notée $D_4\cos\Phi'4$ du terme alternatif fondamental de $d_i$, rapportée à une position de référence de phase constituée par la première dent d'indice i = O soit $d_o$ de la série de n/2 = 22 dents affectée à un cylindre donné. Pour ce faire, l'étage 40 est adapté à calculer :

$$D_4\cos\Phi'_4 = (1/11).\sum_{0}^{21} d_i.\cos(i\pi/11)$$

et à l'appliquer à une mémoire-tampon 42.

Les n/2 facteurs de pondération (soit 22 dans l'exemple décrit) de l'expression visée ci-dessus, sont constitués par les onze valeurs successivement prises deux fois, mais avec des signes opposés, par le terme (cos i $\pi$/11) lorsque le rang i de la dent concernée varie de 0 à 10 puis de 11 à 21. Ces valeurs sont stockées dans la mémoire permanente 41, associée à l'étage de calcul 40. Le terme $\delta\Theta$ étant le pas angulaire nominal des dents de la couronne de mesure 12 (dans l'exemple décrit ici $\delta\Theta = \pi/22$), la vitesse angulaire instantanée $\Omega_i$ du volant est $\Omega_i = \delta\Theta/d_i$. La valeur projetée sur l'axe de référence de la composante alternative fondamentale $E_4$ de $\Omega_i$ est :

$$E_4\cos\Phi_4 = (1/11).\sum_{0}^{21} \Omega_i.\cos(i\pi/11)$$

En remplaçant $\Omega_i$ par sa valeur $\delta\Theta/d_i$ et en tenant compte du fait que $d_i$ varie peu autour de sa valeur moyenne $d_m = T_4/22$ dans l'exemple, on démontre que :

$$E_4\cos\Phi_4 = -(\Omega_m^2/\delta\Theta).D_4\cos\Phi'_4$$

et que :

$$Cg = -a.\Omega_m.E_4\cos\Phi_4 + b.\Omega_m^2$$

Si les dents $(\delta\Theta_i)$ ne sont pas régulièrement disposées sur la couronne, on démontre qu'il apparaîtra un terme proportionnel à $\Omega_m$ dans $E_4\cos\Phi_4$ mais ce terme n'est pas gênant car son influence dans Cg sera proportionnelle à $\Omega_m^2$ et pourra être compensée en modifiant la valeur du coefficient b.

De la sorte, si on décompose en série de Fourier les deux termes $d_i$ et $\Omega_i$ et si on fait sous forme numérique une détection synchrone d'une projection de leur composante alternative fondamentale, on obtiendra $D\cos\Phi'$

et EcosΦ qui sont deux variables dépendantes. Dans l'exemple décrit d'un moteur à quatre temps et à quatre cylindres, soit deux combustions par tour de volant et donc quatre combustions par cycle de fonctionnement du moteur, ce qui est rappelé par l'indice 4 utilisé, la composante alternative de valeur $E_4\cos\Phi_4$ de $\Omega_i$ est reliée à la composante alternative de valeur $D_4\cos\Phi'_4$ de $d_i$ par la relation

$$E_4\cos\Phi4 \;=\; -\,\Omega_m^2.\,(22/\pi).D_4\cos\Phi'_4$$

Comme l'étude expérimentale visée plus haut l'a montré pour les bas régimes du moteur,

$$Cg \;=\; -\,a.\Omega_m.E'_4 \;+\; b.\Omega_m^2 \;=\; a.\Omega_m^3.\,(22/\pi).D'_4 \;+\; b.\Omega_m^2$$

en posant $E'_4 = E_4\cos\Phi_4$ et $D'_4 = D_4\cos\Phi'_4$

Comme $\Omega_m = \pi/T_4$ on a :

$$Cg \;=\; A.D'_4/T_4^3 \;+\; B/T_4^2$$

ce qui est l'expression cherchée avec

$$T_4 \;=\; \overset{21}{\underset{O}{\Sigma}}\, d_i \quad et \quad D'_4 \;=\; (1/11).\,\overset{21}{\underset{O}{\Sigma}}\, d_i.\cos(i\pi/11)$$

les termes A et B étant des constantes propres soit au moteur concerné, soit à tous ceux de son type.

En pratique, ces constantes A et B sont déterminées par une mesure du couple du moteur en deux points particuliers ou éventuellement, par une analyse statistique (méthode des moindres carrés) d'un grand nombre de mesures réalisées en laboratoire sur un moteur de référence, conforme à la série des moteurs auxquels est destiné le modèle de couplemètre selon l'invention.

En conséquence de ce qui précède, dans le cadre de l'exemple décrit, les grandeurs $T_4$ et $D'_4$, respectivement élaborées dans les étages de calcul 36 et 40, sont, à la fin de chaque demi-tour du volant d'inertie du moteur, synchronisé par au moins une dent d'indexation par cycle moteur, appliquées à un étage de calcul 44 qui élabore Cg, à partir de ces deux grandeurs d'entrée $T_4$ et $D'_4$ et des constantes A et B mémorisées à cet effet, le terme A étant préalablement corrigé avant usage pour être applicable aux hauts régimes du moteur.

En effet, comme cela a été indiqué plus haut, la relation ci-dessus $Cg = A.D'_4/T_4^3 + B/T_4^2$ n'est valable en toute rigueur que pour les bas régimes du moteur. Pour les hauts régimes, une correction du terme A est nécessaire. Pour ce faire, dans le cas d'une couronne 12 solidaire du volant d'inertie, un étage de calcul complémentaire 48 est prévu qui élabore un terme corrigé $Ac = A(1-z)$ avec $z = (fi/fr)^2$, à partir de la valeur de A stockée dans une mémoire permanente 46, de la valeur $T_4$ fournie par la mémoire-tampon 38 ($fi = 1/T_4 =$ fréquence demi-tour, dans l'exemple décrit) et d'un terme fr (fréquence de résonance en torsion de la liaison vilebrequin/volant) également stocké dans la mémoire 46. Le terme corrigé Ac est appliqué au calculateur 44 qui reçoit $T_4$ de la mémoire-tampon 38, B de la mémoire permanente 50 et $D'_4$ de la mémoire-tampon 42 et qui calcule le couple gaz moyen valable sur un demi-tour, selon la relation, à tous les régimes du moteur :

$$Cg \;=\; Ac.D'_4/T_4^3 \;+\; B/T_4^2$$

Dans le but d'obtenir une estimation plus précise de Cg, les coefficients A et B peuvent être identifiés par zone de fonctionnement moteur; ils peuvent aussi être rendus dépendants des réglages moteur, par exemple la richesse r.

Mais une autre façon de faire est de maintenir A et B constants, ce qui permet d'obtenir une première valeur brute de Cg puis, soit de faire intervenir une cartographie de correction (de type additif), soit d'appliquer des termes correctifs de façon à affiner la valeur de Cg. Quelques exemples pratiques de correction seront décrits ci-après.

Dans le cas d'un moteur fonctionnant en mélange pauvre (richesse carburant/air, r<1) avec r non constant, l'étage de calcul 44 qui fournit Cg est, le cas échéant, suivi par un étage de calcul additionnel 52 qui calcule la valeur corrigée de Cg en fonction de cette richesse r, lorsque r<1. Dans ce cas, les valeurs de r en fonction du régime du moteur, déduit de $T_4$, et du couple Cg produit, peuvent être mesurées au moyen d'un capteur prévu à cet effet ou encore avoir été relevées en laboratoire et leur cartographie pour chaque type de moteurs concernés (diesel en particulier), stockée dans une mémoire permanente 54. En fonction des valeurs $T_4$ et Cg appliquées en adresse à la mémoire 54, la valeur r à retenir est entrée dans l'étage de calcul 52 si r<1. Celui-ci détermine tout d'abord un facteur de correction $Q_1 = [1+p_1(r-1)]$, avec $p_1$ proche de + 0,5, puis en affecte Cg pour produire une mesure $(Cg)_r = Cg.Q_1$, corrigée par le facteur $Q_1 < 1$, fonction de la richesse r du mélange lorsque r<1.

Les différents étages de calcul décrits en relation avec la figure unique sont, au fur et à mesure de leur intervention dans le processus décrit, constitués par un microprocesseur opérant sous la dépendance d'un logiciel d'application L développé à cet effet et contenu dans la mémoire permanente 50. Une autre manière de faire est, bien entendu, de réaliser au moins une partie des opérations prévues, au moyen d'un calculateur électronique analogique dont les différents étages assurent chacun une fonction particulière.

L'ensemble des circuits représentés peut être réalisé sous forme de circuit intégré ou de circuit hybride, spécifique du problème à résoudre.

En plus de ce qui a été dit ci-dessus, la liaison élastique vilebrequin/volant entraîne, à haut régime du moteur, une erreur de flexion. En effet, à haut régime, l'excentrage inévitable du centre de gravité du volant, par rapport à son axe de rotation théorique, entraîne une variation périodique non négligeable de la largeur de l'entrefer, situé entre la tête du capteur à réluctance variable 22 et les dents de la couronne de mesure 12. Dans ce cas, l'amplitude du signal alternatif 24 délivré par le capteur 22 varie et les seuils de basculement de l'étage de mise en forme 26 ne correspondent plus à des positions angulaires déterminées de ces dents. Ce qui entraîne une variation additionnelle des durées $d_i$ au cours de chaque tour de volant. Pour compenser une telle variation, plusieurs solutions sont disponibles.

L'une sera de faire appel à un capteur moins sensible à cette flexion tel que les capteurs à effet Hall ou optoélectroniques.

Une autre, imposée par le nombre de véhicules actuellement équipés d'un capteur à réluctance variable, sera d'effectuer une correction cartographique.

Une autre encore sera de monter un capteur de compensation 60, identique au capteur initial 22 et diamétralement opposé à lui, dans le cas d'un moteur ayant deux combustions par tour de volant. Dans ce cas, les signaux analogiques délivrés par les deux capteurs seront de préférence additionnés dans un étage 62 avant d'être appliqués à l'étage de mise en forme 26.

Une autre solution sera de traiter séparément les signaux ainsi fournis par les capteurs à réluctance variable et, en fin de chaîne, de faire la moyenne des résultats $Cg$ obtenus.

Dans l'exemple décrit ci-dessus, le moteur concerné est un moteur à essence à quatre temps et à quatre cylindres et le nombre de repères réels ou virtuels de la couronne de mesure est 44. L'invention n'est, bien entendu, pas limitée à cet exemple particulier. Elle concerne en effet tous les moteurs thermiques à combustion interne quel qu'en soit le type : à quatre temps, à deux temps, à essence, à gazole (diesel) ou à tout autre carburant et quel que soit le nombre de cylindres ou le nombre de repères de la couronne de mesure à condition que $n_c \geqq 2$.

Si l'on désigne par t, le nombre de temps par cycle de fonctionnement du moteur, par k, le nombre de ses cylindres et par n, le nombre de repères réels ou virtuels de la couronne de mesure du volant d'inertie, le nombre de repères qui correspond à chacune des périodes angulaires ($\pi t/k$) des combustions dans le moteur et qui sera pris en compte pour la détection angulaire synchrone de la vitesse angulaire instantanée à la fréquence des combustions est $n_c = (n.t)/(2.k)$, ce qui donne combustion par combustion et donc cylindre par cylindre :

$$T_k = \sum_{0}^{(n_c-1)} d_i.$$

Dans ces conditions, le terme :

$$D_4 \cos \Phi'4 = (1/11).\sum_{0}^{21} d_i.\cos(i.\pi/11) = D'_4$$

visé ci-dessus, s'écrit sous la forme généralisée :

$$D_k \cos \Phi'_k = (2/n_c).\sum_{0}^{(n_c-1)} d_i.\cos(i.2\pi/n_c) = D'_k$$

Par ailleurs, une possibilité pour compenser l'erreur de mesure, due à la flexion cyclique à hauts régimes du moteur, de la liaison élastique vilebrequin-volant d'inertie dans le cas d'un moteur à t temps par cycle de fonctionnement et à k cylindres, pourvu de capteurs à réluctance variable, le nombre total de ces capteurs sera $M = 2k/t$. Ces capteurs seront sensiblement identiques et régulièrement disposés autour de la couronne (12), leurs signaux de sortie étant dans une première forme de réalisation additionnés dans un circuit (62) prévu à cet effet, avant application à l'étage de mise en forme (26).

Dans une seconde forme de réalisation, obligatoire par exemple dans le cas d'une couronne de mesure à une seule dent d'indexation par tour du vilebrequin, les signaux délivrés par chacun des capteurs sont traités par un circuit de mesure 10 et les résultats Cg obtenus sont moyennés pour fournir un signal de mesure Cg corrigé. Une telle solution est représentée sur la figure unique par l'application du signal de sortie du capteur 60 à un dispositif 10', identique au dispositif 10, dont la valeur de sortie C'g est appliquée à un circuit de moyenne algébrique 72 qui reçoit, par ailleurs, la valeur Cg correspondant au capteur 22.

On notera que l'une ou l'autre de ces deux solutions permet de compenser l'erreur résultant des variations d'entrefer du capteur à réluctance variable, variations qui sont produites à hauts régimes par la flexion de la liaison vilebrequin/volant.

Pour optimiser la gestion électronique du fonctionnement des moteurs, le nombre n de repères de mesure peut être relativement grand. Dans un tel cas, la prise en compte individuel de chacun de ces repères pour calculer $D_k \cos \Phi'_k$ conduirait à un nombre élevé d'opérations mathématiques pour l'étage de calcul concerné et donc nécessiterait un microprocesseur relativement puissant. En application du théorème de Shannon sur le nombre minimal d'échantillons périodiques qui définit un signal sinusoïdal, à savoir, deux échantillons, il sera intéressant de regrouper les durées de défilement $d_i$ des différents repères en un nombre entier de paquets, pour une période des combustions du moteur, égal à ce nombre minimal plus un ou deux.

Dans le cas de regroupement le plus général, l'étage de calcul 30 aura pour fonction de calculer non plus la durée de défilement $d_i$ de chacun des repères devant le capteur, mais celle $d_p$ de chacun des paquets de repères qui seront constitués. Ceci permettra par exemple, avec un nombre effectif de paquets égal à m = 4 d'écrire lorsque le nombre de repères n est relativement élevé :

$$D'_k = \frac{1}{2} \cdot \sum_{0}^{3} d_p \cdot \cos(p.\pi/2) = D_k \cos \Phi'_k$$

le terme p étant ici le rang du paquet de repères à prendre en compte, étant entendu qu'un paquet peut comprendre un nombre entier ou fractionnaire de repères. Avec ce regroupement des paquets en repères, le paquet p = O est celui qui contient la dent $d_o$, c'est-à-dire le point mort haut.

Le dispositif de mesure du couple gaz moyen par combustion du mélange gazeux dans les cylindres d'un moteur qui vient d'être décrit avec ses différentes variantes et ses moyens de correction particuliers, est adapté à fournir des résultats satisfaisants pour les régimes stabilisés du moteur.

Dans le cas de régimes transitoires, une correction supplémentaire est nécessaire pour tenir compte de l'erreur dynamique qui affecte alors l'expression du terme $D_k \cos \Phi'_k$ calculée par l'étage 40 du circuit 10. Cette erreur est d'autant plus faible que le nombre de dents de la couronne de mesure est élevé. De bons résultats sont obtenus, avec la couronne de 44 dents décrite, lorsque les transitoires ne sont pas trop violents.

Dans le cas de forts transitoires, notamment pour les accélérations moteur à vide, ces résultats peuvent être améliorés à l'aide d'un terme correctif ajouté à l'expression de $(D_k \cos \Phi'_k)$ définie ci-dessus. Ce terme qui, bien entendu, est à moyenne nulle dans le cas d'un régime stabilisé, fait appel aux deux dernières valeurs calculées de la période $T_k$ des combustions dans les k cylindres du moteur, à savoir $T_{k,e}$ et $T_{k,(e-1)}$. De la sorte, en ne faisant pas figurer les cosinus de $D_k \cos \Phi'_k$ :

$$(D'_k)_{corrigé} = D'_k + \frac{1}{n_c} \cdot \frac{T_{k,e} - T_{k,(e-1)}}{n_c}$$

La correction est d'autant plus importante que le nombre de dents $n_c$ ou de paquets de repères m, par période angulaire de combustion $\pi t/k$, est faible.

Le calcul de $(D'_k)$corrigé est effectué par l'étage de calcul 40, programmé à cet effet.

L'invention n'est pas non plus limitée au mode de calcul de $D_k \cos \Phi'_k$ qui a été décrit ci-dessus, mode dans lequel $d_i$ est pondéré par le cosinus de l'angle $M.\Theta_i$, $\Theta_i$ étant la position du début du repère (début de dent ou front raide) tel que :

$$D_k \cos \Phi'_k = (2/n_c) \cdot \sum_{0}^{(n_c-1)} d_i \cdot \cos(M.\Theta_i)$$

sachant que M = 2k/t que $\Theta_i$ = i.2π/n et que $n_c$ = (n.t)/(2.k), on obtient :

$$M.\Theta_i = (2k/t).(i.2\pi/n) = (i.2k)/(nt.2\pi) = i.(2\pi/n_c).$$

Il est possible de choisir n'importe quelle position angulaire à l'intérieur du repère (ou de la dent), ce qui conduit à la formule plus générale :

9

$$D_k \cos\Phi'_k = (2/n_C) \cdot \sum_{O}^{(n_C-1)} d_i \cdot \cos(i \cdot 2\pi/n_C + \epsilon \cdot 2\pi/n_C)$$

avec $0 \leqq \epsilon < 1$

Il est à noter que la correction en transitoire de régime qui a été précédemment décrite doit être adaptée au choix de la constante $\epsilon$ si $\epsilon$ est différent de zéro.

La valeur $\epsilon = 0{,}5$ présente l'avantage qu'il n'y a pas de correction en transitoire de régime à effectuer car le vecteur $\delta\Omega_k$, généré par le transitoire de régime, est alors perpendiculaire à l'axe de projection utilisé pour le calcul de $D_k \cos\Phi'_k$.

Cette particularité permet d'éviter un calcul de correction pour des utilisations en forts transitoires dans le cas d'une couronne munie d'un faible nombre de repères ou dans le cas de regroupements de repères par paquets.

Il est à noter que les pondérations $\cos(i \cdot 2\pi/n_c)$ peuvent être codés dans la mémoire 41 sur huit chiffres binaires (8 bits) sans conséquence sur la précision de $D_k \cos\Phi'_k$ avec pour seule contrainte que la valeur moyenne de

$$\sum_{i=o}^{(n_C-1)} \cos(i \cdot 2\pi/n_C + \epsilon \cdot 2\pi/n_C)$$

soit nulle.

L'invention n'est pas limitée aux caractéristiques de l'exemple décrit. Une variante consistera à remplacer les dents d'indexation (18-20) de la couronne de mesure (12) par un repère de type quelconque solidaire du volant d'inertie, du vilebrequin ou de l'arbre à cames. Une autre variante consistera à rendre la couronne de mesure 12 solidaire du vilebrequin, par exemple la cible dentée sera montée côté distribution.

Une autre variante encore consistera à ne pas individualiser le microprocesseur assurant les fonctions de calcul numérique du circuit de mesure 10, mais au contraire à faire appel soit à un ou au microprocesseur relativement puissant, assurant déjà les fonctions de calcul numérique du système de gestion électronique générale du véhicule, soit à celui du calculateur moteur. Quant au circuit analogique 26, il sera en général extérieur aux microprocesseurs du commerce utilisés mais, dans des versions spécialement adaptées ("customisées") de ces microprocesseurs, il pourra bien entendu leur être incorporé.

L'invention a été décrite en relation avec un exemple particulier de réalisation qui fait appel aux variables intermédiaires $d_i$, $T_4$ et $D'_4$, et dans lequel les calculs de $d_i$, $T_4$ et $D'_4$ étaient effectués de manière numérique mais le calcul de Cg peut aussi être réalisé par des circuits analogiques classiques.

Ainsi, le signal primaire 24 dont la fréquence est modulée par les variations de vitesse $\Omega$, contient le vecteur E à la fréquence $f_i$. Pour extraire le vecteur E et plus précisément sa projection $E\cos\Phi$, il faut utiliser un convertisseur fréquence-tension suivi d'un détecteur synchrone angulaire à la fréquence $f_i$ avec une phase convenable. Il faut ensuite calculer :

$$Cg = -a.\Omega_m.E\cos\Phi + b.\Omega^2 m$$

L'invention a été décrite en référence à un dispositif mais elle peut aussi être mise en oeuvre suivant un procédé qui comprend les opérations principales suivantes :

(a) élaboration d'une valeur primaire représentative de la durée $d_i$ de défilement de chacun des repères devant le capteur;

(b) traitement de ladite valeur primaire ($d_i$) pour produire deux valeurs secondaires respectivement représentatives de la vitesse angulaire moyenne $\Omega_m$ sur les repères au cours d'une période des combustions dans le moteur et de la projection $E\cos\Phi$, sur la ligne de référence de phase des repères afférents aux périodes angulaires de combustion, de la composante alternative E de le vitesse angulaire instantanée $\Omega_i$ des repères à la fréquence des combustions dans le moteur;

(c) combinaison de ces deux valeurs secondaires suivant une relation :

$$Cg = -a.\Omega_m.E\cos\Phi + b.\Omega_m^2$$

et ainsi obtenir la valeur recherchée les termes a et b étant des constantes déterminées expérimentalement.

Par ailleurs l'opération (b), dans le cas où Cg est une valeur numérique, consiste à :

(b1) calculer à partir de $n_c$ valeurs numériques primaires ($d_i$), une première valeur numérique secondaire

($T_k$) représentative de la durée totale de défilement devant le capteur de chaque série de ($n_c$) repères, afférente à la période angulaire d'une combustion dans le moteur,
avec

$$n_c = (n.t)/(2.k)$$

et

$$T_k = \sum_{0}^{(n_C-1)} d_i$$

(b2) calculer, à partir de $n_c$ valeurs numériques primaires $d_i$ et de facteurs de pondération $\cos(i.2\pi/n_c)$, une seconde valeur numérique secondaire $D_k\cos\Phi'k$ représentative de la projection, sur une'ligne de référence de phase des repères correspondant à l'origine des périodes angulaires des combustions, de l'amplitude de la composante alternative des durées instantanées $d_i$ de défilement devant le capteur des repères de mesure, à la fréquence des combustions dans le moteur, avec

$$D_k\cos\Phi'_k = (2/n_C).\sum_{0}^{(n_C-1)} d_i.\cos(i.2\pi/n_C).$$

Par ailleurs l'opération (c) consiste à :
(c1) calculer la valeur numérique recherchée (Cg), définie par la relation

$$Cg = A.(D_k.\cos\Phi'_k)/T_k^3 + B/T_k^2 = A.D'_k/T_k^3 + B/T_k^2$$

à partir des deux valeurs numériques secondaires $D_k\cos\Phi'_k$ et $T_k$ et de deux constantes A et B expérimentalement déterminées et enregistrées.

D'autres opérations du procédé selon l'invention, notamment celles correspondant au groupage des dents, aux corrections de la valeur Cg en fonction de certaines caractéristiques de fonctionnement du moteur et aux différentes variantes découlent de manière évidente de la description du dispositif et ne seront donc pas décrites à nouveau.

## Revendications

1. Dispositif pour produire une valeur représentative du couple gaz moyen Cg engendré, par chaque combustion du mélange gazeux dans les cylindres d'un moteur thermique à combustion interne, le moteur étant du genre comprenant :
   - des repères de mesure (14-16) disposés sur une couronne (12) solidaire du volant d'inertie du moteur ou du vilebrequin;
   - des moyens (18-20) pour définir une référence d'indexation des repères;
   - un capteur (22) de défilement des repères, monté fixe au voisinage de la couronne (12);
   caractérisé en ce qu'il comprend également :
   - des moyens (26-30-32) pour produire une valeur primaire représentative de la durée $d_i$ de défilement de chacun des repères devant le capteur;
   - des moyens (36-40-41) pour traiter cette valeur primaire $d_i$ et ainsi produire deux valeurs secondaires respectivement représentatives de la vitesse angulaire moyenne $\Omega_m$ sur les repères (14-16) au cours d'une période des combustions dans le moteur et de la projection $E\cos\Phi$, sur la ligne de référence de phase des repères afférents aux périodes angulaires de combustion, de la composante alternative E de la vitesse angulaire instantanée $\Omega_i$ des repères, à la fréquence des combustions dans le moteur; et
   - des moyens (44) pour combiner ces deux valeurs secondaires suivant une relation

   $$Cg = - a.\Omega_m.E\cos\Phi + b.\Omega_m^2$$

   et ainsi produire la valeur recherchée, les termes a et b étant des constantes déterminées expérimentalement.

**2.** Dispositif pour produire une valeur numérique Cg représentative du couple gaz moyen, engendré par chaque combustion du mélange gazeux dans les cylindres d'un moteur thermique à combustion interne, fonctionnant à bas régime, le moteur comportant t temps par cycle de fonctionnement et k cylindres et ledit dispositif étant du genre comprenant :

- un nombre n de repères de mesure (14-16) réels ou virtuels qui sont disposés sur une couronne (12) solidaire du volant d'inertie du moteur ou du vilebrequin;
- des moyens (18-20) pour définir au moins une référence d'indexation des repères (14-16);
- un capteur (22) de défilement des repères, monté fixe au voisinage de la couronne (12);

caractérisé en ce qu'il comprend également :

- des moyens de calcul (26-30-32) pour produire une valeur numérique primaire $d_i$ représentative de la durée instantanée de défilement devant le capteur (22) de chacun des repères (14-16) réels ou virtuels;
- des moyens de traitement numérique de la valeur numérique primaire $d_i$ comprenant, notamment, une unité de calcul (36-40-44), un logiciel d'application (L), des mémoires permanentes (41-46-50) et des mémoires temporaires (34-38-42);
- l'ensemble de ces moyens de calcul et de traitement numérique étant organisé pour constituer en temps opportun :
- des moyens de calcul (36) pour élaborer à partir de la valeur numérique primaire $d_i$, une première valeur numérique secondaire $T_k$ représentative de la durée totale de défilement devant le capteur (22) de chaque série de $n_c$ repères (14-16), afférente à la période angulaire d'une combustion dans le moteur,

avec

$$n_c = (n.t)/(2.k)$$

et

$$T_k = \sum_{0}^{(n_c-1)} d_i$$

- des moyens de calcul (40) pour élaborer, à partir de la valeur numérique primaire $d_i$ et de facteurs de pondération $\cos(i.2\pi/n_c)$ stockés dans une mémoire permanente (41), une seconde valeur numérique secondaire $D_k\cos\Phi'_k$ représentative de la projection, sur une ligne de référence de phase des repères (14-16) correspondant à l'origine des périodes angulaires des combustions, de l'amplitude de la composante alternative des durées instantanées $d_i$ de défilement devant le capteur (22) des repères de mesure (14-16), à la fréquence des combustions dans le moteur, avec

$$D_k\cos\Phi'_k = (2/n_c).\sum_{0}^{(n_c-1)} d_i.\cos(i.2\pi/n_c).$$

- des moyens de calcul (44) pour élaborer la valeur numérique recherchée Cg, défini par la relation

$$Cg = A.(D_k\cos\Phi'_k)/T_k^3 + B/T_k^2 = A.\,D'_k/T_k^3 + B/T_k^2$$

à partir des deux valeurs numériques secondaires $D_k\cos\Phi'_k$ et $T_k$ et de deux constantes A et B expérimentalement déterminées et stockées dans les mémoires permanentes (46-50).

**3.** Dispositif de mesure selon l'une des revendications 1 ou 2, adapté à être monté sur un moteur fonctionnant à la fois à bas et haut régime et dans le cas où la couronne (12) est solidaire du volant d'inertie, caractérisé en ce qu'il comporte des moyens (48) pour corriger avant usage la valeur des constantes a ou A, en fonction du régime du moteur et ainsi produire un terme $a_c = a(1-z)$ ou $Ac = A(1-z)$, dans lequel $z = (fi/fr)^2$, avec fi, la fréquence de combustion et fr, la fréquence de résonance de torsion de la liaison élastique vilebrequin-volant propre au type de moteur concerné, stockée dans une mémoire permanente (46).

**4.** Dispositif de mesure selon l'une des revendications 2 ou 3, caractérisé en ce que des moyens (30), sont le cas échéant, prévus pour regrouper, en un nombre entier m de paquets comprenant un nombre entier ou fractionnaire de repères (avec m supérieur à deux), les valeurs primaires $d_i$ correspondant à chaque

série de $n_c$ repères de mesure (14-16), afférente à une période angulaire de combustion dans le moteur, et pour calculer les durées de défilement de chacun de ces paquets devant le capteur (22) de façon à produire des valeurs numériques primaires $d_p$ et en ce que les moyens (40) réalisent le calcul de

$$D_k \cos\Phi'_k = (2/m) . \sum_{o}^{(m-1)} d_p . \cos(p.2\pi/m)$$

les facteurs de pondération $\cos_{(p}.2\pi/m)$ étant stockés dans la mémoire permanente (41).

5. Dispositif de mesure selon l'une des revendications 1, 2, 3 ou 4, notamment pour la mesure du couple gaz moyen produit par chaque combustion d'un mélange pauvre carburant-air dans les cylindres, caractérisé en ce que, le cas échéant, il comporte des moyens de calcul (52) pour corriger la valeur Cg en fonction de la richesse (r) du mélange quand r<1 et, à cet effet, produire un facteur de correction $Q_1 = [1+p_1(r-1)]$, dans lequel $p_1$ est une constante proche de 0,50 et r, la valeur de la richesse du mélange, et appliquer ce facteur $Q_1$, au signal de mesure Cg pour fournir un signal de mesure numérique corrigé $(Cg)_r = Q_1.Cg$.

6. Dispositif de mesure selon la revendication 5, caractérisé en ce que les valeurs de la richesse r du mélange gazeux afférentes à un type donné de moteur, sont mesurées ou cartographiées en fonction du couple Cg produit et du régime du moteur déduit de $T_k$ puis stockées dans une mémoire permanente (54) associée aux moyens de calcul (52).

7. Dispositif de mesure selon l'une des revendications 2, 3, 4 5 ou 6, caractérisé en ce que, pour permettre de corriger les mesures faites en régime transitoire du moteur, les moyens de calcul (40) élaborent une valeur corrigée :

$$(D'_k)cor = \frac{2}{n_c} \sum_{o}^{(n_c-1)} d_i . \cos(i.2\pi/n_c) + \frac{1}{n_c} . \frac{T_{k,e} - T_{k,(e-1)}}{n_c}$$

avec $T_{k,e}$ et $T_{k,(e-1)}$, les deux dernières valeurs calculées de la période des combustions $T_k$.

8. Dispositif de mesure selon l'une des revendications 2, 3, 4, 5 ou 6, caractérisé en ce que, pour permettre de corriger les mesures faites en régime transitoire du moteur, les moyens de calcul 40 élaborent une valeur corrigée :

$$(D'_k)cor = (2/n_c) . \sum_{o}^{(n_c-1)} d_i . \cos(i.2\pi/n_c + \epsilon.2\pi/n_c)$$

avec $\epsilon = 0,5$
les facteurs de pondération $\cos(i.2\pi/n_c + \epsilon.2\pi/n_c)$ étant stockés dans le mémoire 41.

9. Dispositif de mesure selon l'une des revendications 1 ou 3, caractérisé en ce que, dans le cas où les repères de mesure (14-16) sont des dents en matériau ferromagnétique et le capteur (22) du type à réluctance variable, pour corriger l'erreur provoquée par la flexion cyclique à hauts régimes du moteur de la liaison élastique vilebrequin-volant, des capteurs identiques additionnels (60) sont prévus de manière que le nombre total M de capteurs à réluctance variable soit égal à 2k/t, ces M capteurs étant régulièrement disposés autour de la couronne (12) et leurs signaux analogiques de sortie (24), additionnés dans un circuit (62) prévus à cet effet, avant d'être appliqués aux moyens (26-30-32) adaptés à produire une valeur primaire $d_i$.

10. Dispositif de mesure selon la revendication 3, caractérisé en ce que, dans le cas où les repères de mesure (14-16) sont des dents en matériau ferromagnétique et le capteur (22) du type à réluctance variable, pour corriger l'erreur provoquée par la flexion cyclique à hauts régimes du moteur de la liaison élastique vilebrequin/volant, des capteurs identiques additionnels (60) sont prévus de manière que le nombre total M de capteurs à réluctance variable soit égal à 2k/t, et ce nombre M ne correspondant pas à une symétrie des repères de mesure, ainsi que des moyens de mesure et de calcul (10, 10′) associés à chaque capteur additionnel de manière à obtenir M valeurs de Cg, lesdits M valeurs de Cg étant appliquées à des moyens de calcul (72) de leur moyenne algébrique.

11. Procédé pour produire une valeur représentative du couple gaz moyen Cg engendré, par chaque combustion du mélange gazeux dans les cylindres d'un moteur thermique à combustion interne, le moteur étant du genre comprenant :

- des repères de mesure (14-16) disposés sur une couronne (12) solidaire du volant d'inertie ou du vilebrequin;
- des moyens (18-20) pour définir une référence d'indexation des repères;
- un capteur (22) de défilement des repères, monté fixe au voisinage de la couronne (12);

caractérisé en ce qu'il comprend les opérations suivantes :

(a) élaboration d'une valeur primaire représentative de la durée $d_i$ de défilement de chacun des repères devant le capteur;

(b) traitement de ladite valeur primaire $d_i$ pour produire deux valeurs secondaires respectivement représentatives de la vitesse angulaire moyenne $\Omega_m$ sur les repères au cours d'une période des combustions dans le moteur et de la projection $E\cos\Phi$, sur la ligne de référence de phase des repères afférents aux périodes angulaires de combustion, de la composante alternative E de la vitesse angulaire instantanée $\Omega_i$ des repères à la fréquence des combustion dans le moteur;

(c) combinaison de ces deux valeurs secondaires suivant une relation :

$$Cg = -a.\Omega_m.E\cos\Phi + b.\Omega_m^2$$

et ainsi obtenir la valeur recherchée les termes a et b étant des constantes déterminées expérimentalement.

12. Procédé selon la revendication 11 pour produire une valeur numérique Cg d'un moteur thermique à combustion interne, fonctionnant à bas régime, ledit moteur comportant t temps par cycle de fonctionnement et k cylindres et le nombre de repères de mesure étant n, caractérisé en ce que l'opération (b) comprend les opérations suivantes :

$(b_1)$ calcul à partir de $n_c$ valeurs numériques primaires $d_i$, d'une première valeur numérique secondaire $T_k$ représentative de la durée totale de défilement devant le capteur (22) de chaque série de $n_c$ repères (14-16), afférente à la période angulaire d'une combustion dans le moteur,

avec

$$n_c = (n.t)/(2.k)$$

et

$$T_k = \sum_{0}^{(n_c-1)} d_i$$

$(b_2)$ calcul à partir de $n_c$ valeurs numériques primaires $d_i$ et de facteurs de pondération $\cos(i.2\pi/n_c)$ d'une seconde valeur numérique secondaire $D_k\cos\Phi'_k$ représentative de la projection, sur une ligne de référence de phase des repères (14-16) correspondant à l'origine des périodes angulaires des combustions, de l'amplitude de la composante alternative des durées instantanées $d_i$ de défilement devant le capteur (22) des repères de mesure (14-16), à la fréquence des combustions dans le moteur, avec :

$$D_k\cos\Phi'_k = (2/n_c).\sum_{0}^{(n_c-1)} d_i.\cos(i.2\pi/n_c).$$

13. Procédé selon la revendication 12, caractérisé en ce que l'opération (c) consiste à :

$(c_1)$ calculer la valeur numérique recherchée Cg, définie par la relation

$$Cg = A.D_k\cos\Phi'_k/T_k^3 + B/T_k^2 = A.D'_k/T_k^3 + B/T_k^2$$

à partir des deux valeurs numériques secondaires $D_k cos\Phi'_k$ et $T_k$ et de deux constantes A et B expérimentalement déterminées et enregistrées.

14. Procédé selon l'une des revendications 11, 12 ou 13, adapté à un moteur fonctionnant à la fois à bas et haut régime et dans le cas où la couronne de mesure (12) est solidaire du volant d'inertie, caractérisé en ce qu'il comporte, en outre, l'opération suivante:

(d) la correction (48) avant usage de la valeur des constantes a ou A, en fonction du régime du moteur et ainsi produire un terme

$a_c = a(1-z)$ ou $Ac = A(1-z)$, dans lequel

$z = (fi/fr)^2$, avec fi, la fréquence de combustion et fr, la fréquence de résonance de torsion de la liaison élastique vilebrequin-volant propre au type de moteur concerné.

15. Procédé selon l'une des revendications 11, 12 ou 13, caractérisé en ce que l'opération (a) consiste à :

($a_1$) regrouper, en un nombre entier m de paquets comprenant un nombre entier ou fractionnaire de repères, avec m supérieur à deux, les $n_c$ valeurs numériques primaires $d_i$ correspondant à chaque série de $n_c$ repères de mesure (14-16), afférente à une période angulaire de combustion dans le moteur, et à calculer les durées de défilement de chacun de ces paquets devant le capteur (22) de façon à produire m valeurs numériques primaires $d_p$, et

en ce que l'opération (b) consiste à :

(b'2) calculer

$$D_k cos\Phi'_k = (2/m) . \sum_{0}^{(m-1)} d_p . cos(p.2\pi/m)$$

16. Procédé selon l'une des revendications 11 à 15, notamment pour la mesure du couple gaz moyen produit par chaque combustion d'un mélange pauvre carburant-air dans les cylindres, caractérisé en ce qu'il comprend, en outre, les opérations suivantes :

(d) calcul (52) pour corriger la valeur Cg en fonction de la richesse r du mélange quand r<1, ladite opération d) consistant à :

(d1) produire quand r≦1 un facteur de correction $Q_1 = [1+p_1(r-1)]$, dans lequel $p_1$ est une constante proche de 0,50 à déterminer expérimentalement et r, la valeur de la richesse du mélange, et

(d2) appliquer ce facteur $Q_1$ quand r≦1, à la valeur Cg pour fournir une valeur numérique corrigée $(Cg)_r = Q_1.Cg$.

17. Procédé selon la revendication 16, caractérisé en ce que les valeurs de la richesse r du mélange gazeux afférentes à un type donné de moteur, résultent d'une opération de mesure ou de cartographie en fonction du couple Cg produit et du régime du moteur déduit de $T_k$.

18. Procédé selon l'une des revendications 12 à 17, caractérisé en ce que, pour permettre de corriger les mesures faites en régime transitoire du moteur, il comprend, en outre, l'opération suivante :

(f) calcul d'une valeur corrigée :

$$(D'_k)_{cor} = \frac{2}{n_c} . \sum_{0}^{(n_c-1)} d_i . cos(i.2\pi/n_c) + \frac{1}{n_c} . \frac{T_{k,e} - T_{k,(e-1)}}{n_c}$$

avec $T_{k,e}$ et $T_{k,(e-1)}$, les deux dernières valeurs calculées de la période des combustions $T_k$.

19. Procédé selon l'une des revendications 12 à 17, caractérisé en ce que, pour permettre de corriger les mesures faites en régime transitoire du moteur, il comprend, en outre, l'opération suivante :

(g) calcul d'une valeur corrigée :

$$(D'_k)_{cor} = (2/n_C) . \sum_{0}^{(n_C-1)} d_i . \cos(i.2\pi/n_C + \epsilon.2\pi/n_C)$$

avec $\epsilon = 0,5$

20. Procédé selon l'une des revendications précédentes 11 à 19, caractérisé en ce que, dans le cas où les repères de mesure (14, 16) sont des dents en matériau ferromagnétique et le capteur (22) du type à réluctance variable, pour corriger l'erreur provoquée par la flexion cyclique à hauts régimes du moteur de la liaison élastique vilebrequin-volant, ledit procédé comprend, en outre, les opérations suivantes :
   - mise en place d'un nombre total M=2k/t capteurs identiques (22-60) à réluctance variable selon une disposition régulière autour de la couronne (12),
   - addition (62) des signaux fournis par les M capteurs pour obtenir un signal indépendant de ladite flexion qui est utilisé pour la mesure de la valeur primaire.

21. Procédé selon l'une des revendications précédentes 11 à 19, caractérisé en ce que, dans le cas où les repères de mesure (14-16) sont des dents en matériau ferromagnétique et le capteur (22) du type à réluctance variable, pour corriger l'erreur provoquée par la flexion cyclique vilebrequin/volant, ledit procédé comprend, en outre, les opérations suivantes :
   - mise en place d'un nombre total M=2k/t capteurs identiques (22-60) à réluctance variable autour de la couronne (12), le nombre M ne correspond pas à une symétrie des repères de mesure;
   - calcul (10,10′) de M valeurs de Cg à partir des signaux fournis par lesdits M capteurs identiques (22-60); et
   - calcul de la valeur moyenne algébrique des M valeurs de Cg.


**Patentansprüche**

1. Vorrichtung zur Erstellung eines das mittlere erzeugte Drehmoment Cg darstellenden Wertes für jede Verbrennung des Gasgemisches in den Zylindern eines Verbrennungsmotors, der aufweist:
   - Meßmarkierungen (14-16) an einem Kranz (12), der an einem Schwungrad des Motors oder an der Kurbelwelle befestigt ist;
   - eine Anordnung (18-20) zur Bildung einer Anzeigereferenz der Markierungen;
   - einen Fühler (22) für den Vorbeilauf der Markierungen, der fest in der Nähe des Kranzes (12) angeordnet ist;
   **dadurch gekennzeichnet**, daß sie außerdem aufweist:
   - eine Anordnung (26-30-32) zur Erstellung eines Primärwertes der Dauer $d_i$ des Vorbeilaufs einer jeden Markierung vor dem Fühler;
   - eine Anordnung (36-40-41) zur Verarbeitung des Primärwertes $d_i$ um so zwei Sekundärwerte zu erhalten für die mittlere Winkelgeschwindigkeit $\Omega_m$ der Markierungen (14-16) während einer Verbrennungsperiode im Motor bzw. für die Projektion $E\cos\Phi$ auf die Referenzlinie der Phase der den Winkelperioden der Verbrennung zugeordneten Markierungen der Wechselspannungs-Komponente E der momentanen Winkelgeschwindigkeit $\Omega_i$ der Markierungen bei der Frequenz der Verbrennungen im Motor; und
   - eine Anordnung (44), um diese beiden Werte gemäß der folgenden Beziehung zu kombinieren
   $$Cg = -a.\Omega_m.E\cos\Phi + b.\Omega_m^2$$
   um dergestalt den gesuchten Wert zu ermitteln, wobei die Größen a und b experimentell bestimmte Konstante sind.

2. Vorrichtung zur Erstellung eines das mittlere Drehmoment darstellenden numerischen Wertes Cg für jede Verbrennung des Gasgemisches in den Zylindern eines Verbrennungsmotors, der mit niedrigen Drehzahlen läuft, wobei der Motor t Takte pro Betriebszyklus ausführt, und k Zylinder enthält, und wobei die Vorrichtung aufweist:
   - eine Anzahl n von reellen oder virtuellen Meßmarkierungen (14-16), die entlang eines Kranzes (12) angeordnet sind, der fest mit dem Schwungrad des Motors oder der Kurbelwelle verbunden ist;
   - eine Anordnung (18-20), um wenigstens eine Anzeigereferenz der Markierungen (14-16) zu definieren;

- einen Fühler (22) für den Vorbeilauf der Makierungen, der fest in der Nähe des Kranzes (12) angeordnet ist;

**dadurch gekennzeichnet,** daß sie außerdem aufweist:

- eine Rechenanordnung (26-30-32) zur Erstellung eines numerischen Primärwertes $d_i$ für die momen-
tane Vorbeilaufdauer vor dem Fühler (22) einer jeden reellen oder virtuellen Markierung (14-16);
- eine Anordnung zur numerischen Verarbeitung des numerischen Primärwertes $d_i$, die insbesondere
eine Rechenanordnung (36-40-44), ein Anwendungsprogramm (L), Permanentspeicher (41-56-50)
und Zwischenspeicher (34-38-42) enthält;
- wobei die Gesamtheit dieser Rechen- und numerischen Verarbeitungsanordnungen derart aufgebaut sind, daß sie zu gegebener Zeit:
- eine Rechenanordnung (36) bilden, um ausgehend von dem numerischen Primärwert $d_i$ einen ersten
numerischen Sekundärwert $T_k$ bilden, welcher die gesamte Vorbeilaufdauer vor dem Fühler (22) einer jeglichen Serie von $n_c$ Markierungen (14-16) darstellt, entsprechend der Winkelperiode einer Verbrennung im Motor, mit

$$n_c = (n.t)/(2.k)$$

et

$$T_k = \sum_{o}^{(n_c-1)} d_i$$

- eine Rechenanordnung (40) zur Erstellung, ausgehend vom numerischen Primärwert $d_i$ und Gewichtungsfaktoren $\cos(i.2\pi/n_c)$ die in einem Permanentspeicher (41) gespeichert sind, eines zweiten numerischen Sekundärwertes $D_k\cos\Phi'k$ für die Projektion auf eine Referenzlinie der Phase der Markierungen (14-16) entsprechend dem Ursprung der Winkelperioden der Verbrennungen der Amplitude der Wechselspannungs-Komponente der momentanen Vorbeilaufdauern $d_i$ vor dem Fühler (22)
der Meßmarkierungen (14-16) bei der Freqenz der Verbrennungen im Motor mit

$$D_k\cos\Phi'_k = (2/n_c) . \sum_{o}^{(n_c-1)} d_i.\cos(i.2\pi/n_c) .$$

- eine Rechenanordnung (44) zur Erstellung des gesuchten numerischen Wertes Cg, welcher durch
die Beziehung

$$Cg = A.(D_k\cos\Phi'_k)/T_k^3 + B/T_k^2 = A. D'_k/T_k^3 + B/T_k^2$$

definiert ist, ausgehend von den beiden numerischen Sekundärwerten $D_k\cos\Phi'_k$ und $T_k$ und von zwei
experimental bestimmten und in den Permanentspeichern (46-50) gespeicherten Konstanten A und
B.

3. Vorrichtung zur Messung nach einem der Ansprüche 1 oder 2, zum Einbau in einen Motor, der sowohl mit
hoher als auch mit niedriger Drehzahl läuft, und dessen Kranz (12) fest mit dem Schwungrad verbunden
ist, **dadurch gekennzeichnet**, daß sie eine Anordnung (48) aufweist, um vor dem Einsatz den Wert der
Konstanten a oder A als Funktion der Motordrehzahl zum Korrigieren und dergestalt eine Größe $a_c = a(1-z)$ oder $A_c = A(1-z)$ zu erstellen, wobei $z = (fi/fr)^2$ ist, fi die Frenquenz der Verbrennung, und fr die Resonanzfrequenz der Torsion der elastischen Verbindung aus Kurbelwelle und Schwungrad ist, entsprechend
dem verwendeten Motor und gespeichert in einem Permanentspeicher (46).

4. Vorrichtung zur Messung nach einem der Ansprüche 2 oder 3, **dadurch gekennzeichnet,** daß gegebenenfalls eine Anordnung (30) vorgesehen ist zur Zusammenfassung zu einer ganzen Anzahl m von Paketen, enthaltend eine ganze Anzahl oder einen Bruchteil von Markierungen (wobei m größer als zwei
ist), sowie die Primärwerte $d_i$ entsprechend einer jeden Serie von $n_c$ Meßmarkierungen (14-16) entsprechend einer Winkelperiode der Verbrennung im Motor zur Berechnung der Vorbeilaufdauer eines jeden
der Pakete vor dem Fühler (22) dergestalt, daß numerische Primärwerte $d_p$ erstellt werden, und daß die
Anordnung (40) die folgende Berechnung durchführt

EP 0 532 419 B1

$$D_k \cos\Phi'_k = (2/m) \cdot \sum_{0}^{(m-1)} d_p \cdot \cos(p \cdot 2\pi/m)$$

wobei die Gewichtungsfaktoren $\cos(P.2\pi/m)$ im Permanentspeicher (41) gespeichert sind.

5. Vorrichtung zur Messung nach einem der Ansprüche 1, 2, 3 oder 4, insbesondere zur Messung des während jeder Verbrennung eines abgemagerten Gasgemisches aus Brennstoff-Luft in den Zylindern erzeugte mittleren Drehmomentes, **dadurch gekennzeichnet,** daß sie gegenenfalls eine Rechenanordnung (52) aufweist, um den Wert Cg als Funktion der Anreicherung (r) des Gemisches zu korrigieren, wenn r<1 ist, und um zu diesem Zweck einen Korrekturfaktor $Q_1 = [1+p_1(r-1)]$ zu erstellen, wobei $p_1$ eine Konstante in der Nähe von 0,50 und r der Wert der Anreicherung im Gemisch ist, und um diesen Faktor $Q_1$ auf das Meßsignal Cg anzuwenden, um ein korrigiertes numerisches Meßsignal $(Cg)_r = Q_1.Cg$ zu erhalten.

6. Vorrichtung nach Anspruch 5, **dadurch gekennzeichnet,** daß die Werte der Anreicherung r des Gasgemisches entsprechend einem bestimmten Motortyp gemessen oder festgehalten werden als Funktion des erzeugten Drehmomentes Cg und der Drehzahl des Motors abgeleitet von $T_k$, und anschließend in einem der Rechenanordnung (52) zugeordneten Permanentspeicher (54) gespeichert werden.

7. Vorrichtung zur Messung nach einem der Ansprüche 2, 3, 4, 5 oder 6, **dadurch gekennzeichnet,** daß zur Ermöglichung der Korrektur der bei Übergangsdrehzahlen des Motors durchgeführten Messungen die Rechenanordnung (40) einen Korrekturfaktor erstellt gemäß

$$(D'_k)_{cor} = \frac{2}{n_c} \cdot \sum_{0}^{(n_c-1)} d_i \cdot \cos(i \cdot 2\pi/n_c) + \frac{1}{n_c} \cdot \frac{T_{k,e} - T_{k,(e-1)}}{n_c}$$

wobei $T_{k,e}$ und $T_{k,(e-1)}$ die beiden letzten berechneten Werte der Verbrennungsperiode $T_k$ sind.

8. Vorrichtung zur Messung nach einem der Ansprüche 2, 3, 4, 5 oder 6, **dadurch gekennzeichnet,** daß zur Ermöglichung der Korrektur der während der Übergangsdrehzahlen des Motors durchgeführten Messungen die Rechenanordnung (40) einen Korrekturfaktor erstellt gemäß

$$(D'_k)_{cor} = (2/n_c) \cdot \sum_{0}^{(n_c-1)} d_i \cdot \cos(i \cdot 2\pi/n_c + \epsilon \cdot 2\pi/n_c)$$

mit $\epsilon = 0,5$
wobei die Gewichtungsfaktoren $\cos(i.2\pi/n_c + \epsilon.2\pi/n_c)$ im Speicher (41) gespeichert sind.

9. Vorrichtung zur Messung nach einem der Ansprüche 1 oder 3, **dadurch gekennzeichnet,** daß in dem Fall, in dem die Meßmarkierungen (14-16) Zähne aus ferromagnetischem Material sind, und der Fühler (22) ein Fühler mit variabler Reluktanz ist, zur Korrektur des durch die zyklische Durchbiegung von hohen Motordrehzahlen der elastischen Verbindung aus Kurbelwelle und Schwungrad bedingten Fehlers identische zusätzliche Fühler (60) dergestalt vorgesehen sind, daß die Gesamtzahl M an Fühlern variabler Reluktanz gleich 2k/t ist, daß diese M Fühler regelmäßig um den Umfang (12) herum angeordnet sind, und daß ihre analogen Ausgangssignale (24) in einem zu diesem Zweck vorgesehenen Schaltkreis (62) addiert werden, bevor sie der Anordnung (26-30-32) zur Erstellung eines Primärwertes $d_i$ zugeführt werden.

10. Vorrichtung zur Messung nach Anspruch 3, **dadurch gekennzeichnet,** daß in dem Fall, in dem die Meßmarkierungen (14-16) Zähne aus ferromagnetischem Material sind, und der Fühler (22) ein solcher mit variabler Reluktanz ist, zur Korrektur des durch die zyklische Durchbiegung bei hohen Motordrehzahlen der elastischen Verbindung Kurbelwelle/Schwungrad bedingten Fehlers die identischen zusätzlichen

18

Fühler (60) dergestalt vorgesehen sind, daß die Gesamtzahl M der Fühler mit variabler Reluktanz gleich 2k/t ist, und daß die Anzahl M nicht einer Symmetrie an Meßmarkierungen entspricht, noch die Meß- und Rechenanordnung (10-10'), die jeden zusätzlichen Fühler dergestalt zugeordnet ist, daß M Werte für Cg erhalten werden, wobei diese M Werte für Cg der Rechenanordnung (72) mit ihrem algebraischem Mittelwert zugeführt werden.

11. Verfahren zur Erstellung eines das mittlere Drehmoment Cg darstellenden Wertes für jede Verbrennung des Gasgemisches in den Zylindern eines Verbrennungsmotors, wobei der Motor aufweist:
  - Meßmarkierungen (14-16) an einem Kranz (12), der fest mit dem Schwungrad oder der Kurbelwelle verbunden ist;
  - eine Anordnung (18-20), um eine Anzeigereferenz der Markierungen zu bilden;
  - einen Fühler (22) für den Vorbeilauf der Markierungen, der fest in der Nähe des Kranzes (12) angeordnet ist,

  **dadurch gekennzeichnet,** daß es die folgenden Verfahrensschritte aufweist:
  (a) Erstellung eines Primärwertes für die Dauer $d_i$ des Vorbeilaufs einer jeden Markierung vor dem Fühler;
  (b) Verarbeitung des Primärwertes $d_i$ zur Erstellung zweier Sekundärwerte für die mittlere Geschwindigkeit $\Omega_m$ der Markierungen während einer Verbrennungsperiode im Motor, und der Projektion $E\cos\Phi$ auf die Referenlinie der Phase der Markierungen, entsprechend den Winkelperioden der Verbrennung der Wechselspannungs-Komponente E der momentanen Winkelgeschwindigkeit $\Omega_i$ der Markierungen bei der Verbrennungsfrequenz im Motor;
  (c) Kombination der beiden Sekundärwerte gemäß der Beziehung

  $$Cg = -a.\Omega_m.E\cos\Phi + b.\Omega_m^2$$

  und dergestalt Erhalt des gesuchten Wertes, wobei die Größen a und b experimentell bestimmte Konstanten sind.

12. Verfahren nach Anspruch 11 zur Erstellung eines numerischen Wertes Cg für einen Verbrennungsmotor, der mit niedriger Drehzahl und mit t Takten pro Arbeitszyklus läuft, und k Zylinder aufweist, und die Anzahl der Meßmarkierungen n ist, **dadurch gekennzeichnet,** daß der Schritt (b) die folgenden Schritte aufweist:
  ($b_1$) Berechnung ausgehend von den numerischen Primärwerten $d_i$ eines ersten numerischen Sekundärwertes $T_k$ für die gesamte Dauer des Vorbeilaufs vor dem Fühler (22) einer jeden Serie von $n_c$ Markierungen (14-16) entsprechend der Winkelperiode einer Verbrennung im Motor mit

  $$n_c = (n.t)/(2.k)$$

  et

  $$T_k = \sum_{o}^{(n_c-1)} d_i$$

  ($b_2$) Berechnung, ausgehend von $n_c$ numerischen Primärwerten $d_i$ und von Gewichtungsfaktoren $\cos(i.2\pi/n_c)$ ines zweiten numerischen Sekundärwertes $D_k\cos\Phi'k$ für die Projektion auf eine Referenzlinie der Phase der Markierungen (14-16) entsprechend dem Ursprung der Winkelperioden der Verbrennungen, der Amplitude der Wechselspannungs-Komponente, der Momentandauern $d_i$ des Vorbeilaufs vor dem Fühler (22) der Meßmarkierungen (14-16) bei der Frequenz der Verbrennungen im Motor mit:

  $$D_k\cos\Phi'k = (2/n_c).\sum_{o}^{(n_c-1)} d_i.\cos(i.2\pi/n_c).$$

13. Verfahren nach Anspruch 12, **dadurch gekennzeichnet,** daß der Schritt (c) besteht aus:
  ($c_1$)  Berechnung des gesuchten numerischen Wertes Cg, welcher durch die folgende Beziehung definiert ist

  $$Cg = A.D_k\cos\Phi'k/T_k^3 + B/T_k^2 = A.D'_k/T_k^3 + B/T_k^2$$

  ausgehend von zwei numerischen Sekundärwerten $D_k\cos\Phi'_k$ und $T_k$ und von zwei experi-

EP 0 532 419 B1

mentell bestimmten und gespeicherten Konstanten A und B.

14. Verfahren nach einem der Ansprüche 11, 12 oder 13 für einen Motor, der sowohl mit hoher als auch mit niedriger Drehzahl läuft, und dessen Meßkranz (12) mit dem Schwungrad fest verbunden ist, **dadurch gekennzeichnet**, daß es außerdem den folgenden Verfahrensschritt aufweist:

(d) Korrektur (48) vor der Verwendung der Konstanten a oder A als Funktion der Motordrehzahl und anschließende Erstellung eines Ausdrucks

$a_c = a(1-z)$ oder $A_c = A(1-z)$, wobei

$z = (fi/fr)^2$ ist, fi die Frequenz der Verbrennung und fr die Resonanzfrequenz der Torsion der elastischen Verbindung aus Kurbelwelle-Schwungrad für den entsprechenden Motortyp ist.

15. Verfahren nach einem der Ansprüche 11, 12 oder 13, **dadurch gekennzeichnet,** daß der Verfahrensschritt (a) aufweist:

($a_1$) Zusammenfassung zu einer ganzen Zahl m von Paketen, enthaltend eine ganze Anzahl oder einen Bruchteil von Markierungen, wobei m größer als zwei ist, die $n_c$ numerischen Primärwerte $d_i$ entsprechend jeweils einer Serie von $n_c$ Meßmarkierungen (14-16), die einer Winkelperiode der Verbrennung im Motor zugehörig sind, und Berechnung der Vorbeilaufdauern eines jeden der Pakete vor den Fühler (22), dergestalt, daß m numerische Primärwerte $d_p$ erstellt werden,

wobei der Verfahrensschritt (b) besteht aus,

(b'2) Berechnung von

$$D_k \cos\Phi'_k = (2/m) . \sum_{o}^{(m-1)} d_p . \cos(p.2\pi/m)$$

16. Verfahren nach einem der Ansprüche 11 bis 15, insbesondere zur Berechnung des mittleren Drehmomentes, welches für jede Verbrennung eines abgemagerten Gasgemisches aus Kraftstoff-Luft in den Zylindern entsteht, **dadurch gekennzeichnet**, daß es außerdem die folgenden Verfahrensschritte aufweist:

(d) Berechnung (52) zur Korrektur des Wertes Cg als Funktion der Anreicherung r des Gemisches, wenn r < 1 ist, des Verfahrensschrittes )d), bestehend aus:

(d1) Erstellung eines Korrekturfaktors $Q_1 = [1+p_1(r-1)]$, wenn $r \leqq 1$ ist, wobei $p_1$ eine experimentell zu bestimmende Konstante in der Nähe von 0,50 ist, und r der Wert der Anreicherung des Gemisches ist, und

(d2) Anwendung dieses Faktors $Q_1$, wenn $r \leqq 1$ ist, auf den Wert Cg, um einen korrigierten numerischen Wert $(Cg)_r = Q_1.Cg$ zu erhalten.

17. Verfahren nach Anspruch 16, **dadurch gekennzeichnet,** daß die Werte der Anreicherung r des Gasgemisches entsprechend einem gegebenen Motortyp durch eine Messung oder eine Aufzeichnung erhalten werden als Funktion des erzeugten Drehmomentes und der Motordrehzahl, abgeleitet aus $T_k$.

18. Verfahren nach einem der Ansprüche 12 bis 17, **dadurch gekennzeichnet,** daß zur Ermöglichung der Korrektur der durchgeführten Messungen bei Übergangsdrehzahlbereichen des Motors es außerdem den folgenden Verfahrensschritt aufweist:

(f) Berechnung eines Korrekturwertes gemäß

$$(D'_k)_{cor} = \frac{2}{n_c} . \sum_{o}^{(n_c-1)} d_i.\cos(i.2\pi/n_c) + \frac{1}{n_c} . \frac{T_{k,e} - T_{k,(e-1)}}{n_c.}$$

wobei $T_{k,e}$ und $T_{k,(e-1)}$ die beiden letzten berechneten Werte der Verbrennungsperiode $T_k$ sind.

19. Verfahren nach einem der Ansprüche 12 bis 17, **dadurch gekennzeichnet,** daß zur Ermöglichung der Korrektur der durchgeführten Messungen bei Drehzahlübergangsbereichen des Motors es außerdem den folgenden Verfahrensschritt aufweist:

(g) Berechnung eines Korrekturwertes gemäß

20

$$(D'_k)_{cor} = (2/n_C) \cdot \sum_{o}^{(n_C-1)} d_i \cdot \cos(i \cdot 2\pi/n_C + \epsilon \cdot 2\pi/n_C)$$

mit $\epsilon = 0,5$

**20.** Verfahren nach einem der vorhergehenden Ansprüche 11 bis 19, **dadurch gekennzeichnet,** daß in dem Fall, in dem die Meßmarkierungen (14-16) Zähne aus ferromagnetischem Material sind, und der Fühler (22) ein solcher mit variabler Reluktanz ist, zur Korrektur des durch die zyklische Durchbiegung bei hohen Motordrehzahlen der elastischen Verbindung aus Kurbelwelle-Schwungrad bedingten Fehlers das Verfahren außerdem die folgenden Verfahrensschritte aufweist:

- Anordnung einer Gesamtzahl M=2k/t identischer Fühler (22-60) mit variabler Reluktanz, gemäß einer regelmäßigen Anordnung um den Kranz (12) herum;
- Addition (62) der von den M Fühlern stammenden Signale zum Erhalt eines Signals unabhängig von dieser Durchbiegung, welches zur Messung des Primärwertes verwendet wird.

**21.** Verfahren nach einem der vorhergehenden Ansprüche 11 bis 19, **dadurch gekennzeichnet,** daß in dem Fall, in dem die Meßmarkierungen (14-16) Zähne aus ferromagnetischem Material sind, und der Fühler (22) ein solcher mit variabler Reluktanz ist, zur Korrektur des durch die zyklische Durchbiegung von Kurbelwelle/Schwungrad hervorgerufenen Fehlers das Verfahren außerdem die folgenden Verfahrensschritte aufweist:

- Anordnung einer Gesamntzahl M=2k/t identischer Fühler (22-60) mit variabler Reluktanz um den Kranz (12) herum, wobei die Anzahl M nicht einer Symmetrie der Meßmarkierungen entspricht;
- Berechnung (10, 10') von M Werten von Cg ausgehend von den von den M identischen Fühlern (22-60) gelieferten Signalen; und
- Berechnung des algebraischen Mittelwertes der M Werte für Cg.

## Claims

**1.** Device for producing a value representing the average gas torque Cg for each combustion of the gaseous mixture in the cylinders of a thermal internal combustion engine, the engine being of the type including:

- measuring markers (14 - 16) which are disposed on a ring gear (12) integral with the inertial flywheel of the engine, or with the crankshaft;
- means (18 - 20) for defining an indexation reference for the markers;
- a sensor (22) for sensing the passing by of the markers, mounted in a fixed manner adjacent to the ring gear (12);

characterised in that it also includes:

- means (26-30-32) for producing a primary value $d_i$ representing the instantaneous duration of passing by of each of the markers in front of the sensor;
- means (36-40-41) for processing of this primary value $d_i$ to produce two secondary signals representative respectively of the average angular speed $\Omega_m$ of the markers (14-16) during one period of combustions in the engine and, for the same period of combustion, of the projection $E\cos\Phi$ on the phase reference line, of groups of markers relating to the angular period of combustion, of the alternative component E of instantaneous angular speed $\Omega_i$ of the markers, and to the frequency of combustions in the engine; and
- means (44) for combining these two secondary signals according to a relationship:

$$Cg = -a \cdot \Omega_m \cdot E\cos\Phi + b \cdot \Omega_m^2$$

and thus producing the signal sought, the terms a and b being experimentally determined constants.

**2.** Device for producing a numerical value Cg representing the average gas torque produced by each combustion of the gaseous mixture in the cylinders of a thermal internal combustion engine, operating at a high capacity range, the engine comprising t strokes per operating cycle and k cylinders, and said device being of the type including:

- a number n of measuring actual or virtual markers (14-16) which are disposed on a ring gear (12) integral with the inertial flywheel of the engine or with the crankshaft;
- means (18-20) for defining at least one indexation reference of the markers (14-16);

- a sensor (22) for sensing the passing by of the markers, mounted in a fixed manner adjacent to the ring gear (12);

characterised in that it also includes:

- calculating means (26-30-32) for producing a primary numerical value $d_i$ representing the instantaneous duration of passing by of each of the actual or virtual markers (14-16) in front of the sensor (22);
- means for numerical processing of the primary numerical value $d_i$ comprising in particular a calculating unit (36-40-44), application software (L), permanent memories (41-46-50) and temporary memories (34-38-42);
- all of these calculating and numerical processing means being organised to constitute as required:
- calculation means (36) to produce from the primary numerical value $d_i$ a first secondary numerical value $T_k$ representing the total duration of passing by in front of the sensor (22) of each series of $n_c$ markers (14-16), relating to the angular period of a combustion in the engine, with

$$n_c = (n \cdot t)/(2 \cdot k)$$

and

$$T_k = \sum_o^{(n_c-1)} d_i$$

- calculation means (40) for producing from the primary numerical value $d_i$ and weighting factors $\cos(i.2\pi/n_c)$ stored in a permanent memory (41) of a second secondary numerical value $D_k\cos\Phi'_k$ representing the projection on a line of phase reference of the markers (14-16) corresponding to the origin of the angular periods of combustions, to the amplitude of the alternative component of the instantaneous durations $d_i$ of passing by of the measuring markers (14-16) in front of the sensor (22), to the frequency of combustions in the engine, with

$$D_k\cos\Phi'_k = (2/n_c) \cdot \sum_o^{(n_c-1)} d_i \cdot \cos(i.2\pi/n_c)$$

- calculating means (44) for producing the numerical value Cg sought, defined by the relationship

$$Cg = A \cdot (D_k\cos\Phi'_k)/T^3_k + B/T^2_k = A \cdot D'_k/T^3_k + B/T^2_k$$

from the two secondary numerical values $D_k\cos\Phi'_k$ and $T_k$ and two constants A and B determined experimentally and stored in the permanent memories (46-50).

3. Measuring device according to one of claims 1 or 2, adapted to be mounted in an engine operating simultaneously at high and low capacity ranges and in the case where the ring gear (12) is integral with the inertial flywheel, characterised in that it comprises means (48) for correction prior to use of the value of the constants a or A according to the capacity range of the engine and thus to produce a term $a_c = a (1-z)$ or $Ac = A(1-z)$ in which $z = (fi/fr)^2$ with fi as the frequency of combustion and fr as the frequency of torsional resonance of the elastic crankshaft/flywheel joint belonging to the type of engine concerned, stored in a permanent memory (46).

4. Measuring device according to one of claims 1 or 3, characterised in that means (30) are provided where appropriate for grouping markers together in a whole number m of packets comprising a whole or fractional number (with m greater than 2), the primary values $d_i$ corresponding to each series of $n_c$ measuring markers (14-16) relating to an angular period of combustion in the engine, and for calculating the durations of passing by of each of these packets in front of the sensor (22) such as to produce numerical values $d_p$ and in that means (40) implement the calculation of

$$D_k\cos\Phi'_k = (2/m) \cdot \sum_p^{(m-1)} d_p \cdot \cos(p.2\pi/m)$$

the weighting factors $\cos(p.2\pi/m)$ being stored in the permanent memory (41).

5. Measuring device according to one of claims 1, 2, 3 or 4, particularly for the measurement of the average gas torque produced by each combustion of a lean fuel-air mixture in the cylinders, characterised in that where appropriate it comprises calculating means (52) for correcting the value Cg according to the richness (r) of the mixture when r<1, at for this purpose to produce a correction factor of $Q_1 = [1+p_1 (r-1)]$ in which $p_1$ is a constant close to 0.50 and r is the value of the richness of the mixture, and applying this factor $Q_1$ to the measured signal Cg to obtain a corrected measured numerical signal $(Cg)_r = Q_1 . Cg$.

6. Measuring device according to claim 5, characterised in that the values of the richness r of the gaseous mixture relating to a given type of engine is measured or mapped according to the torque Cg produced and to the capacity range of the engine deduced from $T_k$ then stored in a permanent memory (54) associated with the calculating means (52).

7. Measuring device according to one of claims 2, 3, 4, 5 or 6, characterised in that in order to allow correction of the measurements carried out during a transitional range of capacity of the engine, the calculating means (40) produce a corrected value:

$$(D'_k)_{cor} = \frac{2}{n_c} . \sum_{0}^{(n_c-1)} d_i . \cos(i.2\pi/n_c) + \frac{1}{n_c} . \frac{T_{k,e} - T_{k,(e-1)}}{n_c}$$

where $T_{k,e}$ and $T_{k(e-1)}$ are the two last values of the period of combustions $T_k$ calculated.

8. Measuring device according to one of claims 2, 3, 4, 5 or 6, characterised in that in order to allow correction of the measurements made during the transitional capacity range of the engine, calculating means 40 produce a corrected value:

$$(D'_k)_{cor} = (2/n_c) . \sum_{0}^{(n_c-1)} d_i . \cos(i.2\pi/n_c + \epsilon.2\pi/n_c)$$

with $\epsilon = 0.5$
the weighting factors $\cos(i.2\pi/n_c + \epsilon.2\pi/n_c)$ being stored in the memory 41.

9. Measuring device according to one of claims 1 or 3, characterised in that in the case where the measuring markers (14-16) are teeth made of ferro-magnetic material and the sensor (22) is of a variable reluctance type, in order to correct the error caused by the cyclical elasticity with high capacity ranges of the engine of the flywheel/crankshaft joint, identical additional sensors (60) are provided such that the total number M of variable reluctance sensors is equal to 2k/t, these sensors M being regularly disposed around the ring gear (12) and their analogue output signals (24) are summated in a circuit (62) provided for this purpose, before being applied to means (26-30-32) adapted for producing a primary value $d_i$.

10. Measuring device according to claim 3, characterised in that in the case where the measuring markers (14-16) are teeth made from ferro-magnetic material, and the sensor (22) is of the variable reluctance type, to correct the error caused by the cyclical elasticity with high capacity ranges of the engine of the flywheel/crankshaft joint, identical additional sensors (60) are provided such that the total number M of variable reluctance sensors is equal to 2k/t, and this number M does not correspond to a symmetry of measuring markers, as well as measuring and calculating means (10, 10') associated with each additional sensor such as to obtain M values of Cg, said M values of Cg being applied to algebraic means (72) for calculating their average.

11. Method for producing a value representing the average gas torque Cg for each combustion of the gaseous mixture in the cylinders of a thermal internal combustion engine, the engine being of the type including:
- measuring markers (14 - 16) disposed on a ring gear (12) integral with the inertial flywheel or with the crankshaft;

23

- means (18 - 20) for defining an indexation reference for the markers;
- a sensor (22) for sensing the passing by of the markers, mounted in a fixed manner adjacent to the ring gear (12);

characterised in that it includes the following operations:

- production of a primary value $d_i$ representing the instantaneous duration of passing by of each of the markers in front of the sensor;
- processing of said primary value $d_i$ to produce two secondary values representative respectively of the average angular speed $\Omega_m$ of the markers during one period of combustions in the engine and, for the same period of combustion, and of the projection $E\cos\Phi$ on the phase reference line of markers relating to the angular periods of combustion, of the alternative component E of instantaneous angular speed $\Omega_i$ of the markers, and to the frequency of combustions in the engine;
- combination of these two secondary values according to a relationship:

$$Cg = - a.\Omega_m.E\cos\Phi + b.\Omega_m{}^2$$

and thus producing the signal sought, the terms a and b being experimentally determined constants.

12. Method according to claim 11 for producing a numerical value Cg of a thermal internal combustion engine, operating with a low capacity range, said engine comprising t strokes per operating cycle and k cylinders and the number of measuring markers being n, characterised in that the operation (b) comprises the following operations:

(b1) calculation from $n_c$ primary numerical values $d_i$ of a first secondary numerical value $T_k$ representing the total duration of passing by in front of the sensor (22) of each series of $n_c$ markers (14-16), relating to the angular period of a combustion in the engine, with

$$n_c = (n . t)/(2 . k)$$

et

$$T_k = \sum_{o}^{(n_c-1)} d_i$$

(b2) calculation, from $n_c$ primary numerical values $d_i$ and weighting factors $\cos(i.2\pi/n_c)$, of a second secondary numerical value $D_k\cos\Phi'k$ representing the projection on a line of phase reference of the markers (14-16) corresponding to the origin of the angular periods of combustions, to the amplitude of the alternative component of the instantaneous durations $d_i$ of passing by of the measuring markers (14-16) in front of the sensor (22), to the frequency of combustions in the engine, with

$$D_k\cos\Phi'k = (2/n_c) . \sum_{o}^{(n_c-1)} d_i.\cos(i.2\pi/n_c)$$

13. Method according to claim 12, characterised in that the operation (c) consists of calculating the numerical value Cg sought, defined by the relationship

$$Cg = A . (D_k\cos\Phi'_k)/T^3_k + B/T^2_k = A . D'_k/T^3_k + B/T^2_k$$

from the two secondary numerical values $D_k\cos\Phi'_k$ and $T_k$ and two constants A and B determined experimentally and recorded.

14. Method according to one of claims 11, 12, or 13, adapted for an engine operating simultaneously at high and low capacity ranges and in the case where the measuring ring gear (12) is integral with the inertial flywheel, characterised in that it additionally comprises the following operation:

(d) the correction (48) prior to use of the value of the constants a or A, according to the capacity range of the engine and thus to produce a term

$a_c = a(1-z)$ or $Ac = A(1-z)$, in which $z = (fi/fr)^2$ with fi as the frequency of combustion and fr as the frequency of torsional resonance of the elastic crankshaft/flywheel joint belonging to the type of engine concerned.

15. Method according to one of claims 11, 12 or 13, characterised in that the operation (a) consists of:

(a1) grouping together in a whole number m of packets comprising a whole or fractional number of markers, with m greater than 2 of the $n_c$ primary numerical values $d_i$ corresponding to each series of $n_c$ meas-

EP 0 532 419 B1

uring markers (14-16) relating to an angular period of combustion in the engine, and of calculating the durations of passing by of each of these packets in front of the sensor (22) such as to produce m primary numerical values $d_p$ and in that the operation (b) consists of:

(b'2) calculating

$$D_k \cos \phi'_k = (2/m) \cdot \sum_{0}^{(m-1)} d_p \cdot \cos(p \cdot 2\pi/m)$$

16. Method according to one of claims 11 to 15, particularly for measuring the average gas torque produced by each combustion of a lean fuel-air mixture in the cylinders, characterised in that it furthermore comprises the following operations:

(d) calculation (52) to correct the value Cg according to the richness r of the mixture when r<1, said operation (d) consisting of:

(d1) producing, when $r \leqq 1$ a correction factor $Q_1 = [1+p_1 (r-1)]$ in which $p_1$ is a constant close to 0.50 and r is the value of the richness of the mixture, and

(d2) of applying this factor $Q_1$ when $r \leqq 1$ to the value Cg to produce a corrected numerical value $(Cg)_r = Q_1 \cdot Cg$.

17. Method according to claim 16, characterised in that the values of the richness r of the gaseous mixture relating to a given type of engine are the result of a measuring or mapping operation according to the torque Cg produced and the capacity range of the engine deduced from $T_k$.

18. Method according to one of claims 12 to 17, characterised in that to allow correction of the measurements carried out during a transitional capacity range of the engine, it furthermore comprises the following operation:

(f) calculation of a corrected value:

$$(D'_k)_{cor} = \frac{2}{n_c} \cdot \sum_{0}^{(n_c-1)} d_i \cdot \cos(i \cdot 2\pi/n_c) + \frac{1}{n_c} \cdot \frac{T_{k,e} - T_{k,(e-1)}}{n_c}$$

where $T_{k,e}$ and $T_{k(e-1)}$ are the two last values of the period of combustions $T_k$ calculated.

19. Method according to one of the preceding claims 12 to 17, characterised in that in order to allow correction of the measurements made during the transitional capacity range of the engine, said method furthermore comprises the following operation :

(g) calculation of a corrected value:

$$(D'_k)_{cor} = (2/n_c) \cdot \sum_{0}^{(n_c-1)} d_i \cdot \cos(i \cdot 2\pi/n_c + \epsilon \cdot 2\pi/n_c)$$

with $\epsilon = 0.5$

20. Method according to one of the preceding claims 11 to 19, characterised in that in the case where the measuring markers (14-16) are teeth made of ferro-magnetic material, and the sensor (22) is of the variable reluctance type, in order to correct the error caused by the cyclical elasticity at high ranges of capacity of the engine of the elastic crankshaft/flywheel joint, said method furthermore comprises the following operations:

- installation of a total number M = 2k/t identical sensors (22-60) with variable reluctance according to a regular disposition around the ring gear (12),
- addition (62) of the signals provided by the M sensors to obtain an independent signal from said elasticity which is used for measuring the primary value.

25

21. Method according to one of the preceding claims 11 to 19, characterised in that in the case where the measuring markers (14-16) are teeth made from ferro-magnetic material and the sensor (22) is of the variable reluctance type, in order to correct the error caused by the cyclical elasticity of the crankshaft/flywheel joint, said method furthermore comprises the following operations:

- installation of a total number $M = 2k/t$ identical sensors (22-60) with variable reluctance around the ring gear (12), the number M not corresponding to a symmetry of measuring markers;
- calculation (10, 10′) of M values of $Cg$ from signals supplied by said M identical sensors (22-60); and
- calculation of the algebraic average of M values of $Cg$.

EP 0 532 419 B1

22 CAPTEUR

14

12
18
20
16

62

26 MISE EN FORME

28

30 MESURE $d_i$

34 MEM. TAMPON

24

46 A, Fr

32 HORLOGE

36 CALCUL $T_4$

48 $A_c = A(1-3)$

38 MEM. TAMPON

50 B, L

41 $Cos(i\,\pi/11)$

44 CALCUL $C_g = A_c.D'_4/T_4^3 + B/T_4^2$

42 MEM. TAMPON

40 CALCUL $D'_4$

$C_g$

52 $C_g.Q_1$

$(C_g)r$

54 r

10

60

10'

72

CAPTEUR